(19) Europäisches Patentamt
European Patent Office
Office européen des brevets

(11) **EP 4 141 679 A1**

(12) **EUROPEAN PATENT APPLICATION**

(43) Date of publication:
**01.03.2023  Bulletin 2023/09**

(21) Application number: **21193272.8**

(22) Date of filing: **26.08.2021**

(51) International Patent Classification (IPC):
**G06F 11/36** (2006.01)    **G05B 23/00** (2006.01)
**G06F 8/60** (2018.01)

(52) Cooperative Patent Classification (CPC):
**G06F 11/3664; G05B 23/024; G06F 8/60;**
**G06F 11/3696;** G06F 11/3692; G06F 2201/815

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventors:
• **Alpire, Adam**
  **91058 Erlangen (DE)**

• **Bayzat, Anil**
  **91054 Erlangen (DE)**
• **Bruckner, Johann**
  **90429 Nürnberg (DE)**
• **Mehl, Sebastian**
  **91074 Herzogenaurach (DE)**
• **Dirks, Johannes**
  **91088 Bubenreuth (DE)**
• **Lau, Tian Eu**
  **91052 Erlangen (DE)**
• **Nehrkorn, Johannes**
  **91096 Möhrendorf (DE)**
• **Sirbu, Claudiu**
  **81735 München (DE)**
• **Wiedenhöft, Lars**
  **91091 Großenseebach (DE)**

(54) **MANAGEMENT OF AN APP, ESPECIALLY TESTING THE DEPLOYABILITY OF AN APP COMPRISING A TRAINED FUNCTION USING A VIRTUAL TEST ENVIRONMENT, METHOD AND SYSTEM**

(57)    For improved management of an app (120), a computer-implemented method is suggested. Herein, the app (120) is to be deployed on the respective device (150) or an IT system (152) connected to the respective device (150), wherein the app (120) when deployed on the respective device (150) or the IT system (152) is configured to
• receive input data (124) relating to the respective device (150) and
• apply the trained function (122) to the input data (124) to generate output data (126) for analyzing, monitoring, operating and/or controlling the respective device (150) .

The suggested computer-implemented method may comprise:
• embedding the trained function (122) in the app (120);
• running the app (120) in a virtual test environment (128) comprising characteristics (130) of the respective device (150) or the IT system (152); and
• identifying the app (120) as deployable on the respective device (150) or the IT system (152), if running the app (120) in the virtual test environment (128) is successful.

FIG 1

EP 4 141 679 A1

**Description**

Technical field

The present disclosure is directed, in general, to software management systems, in particular systems for managing apps comprising a trained function, such as testing the deployability of such apps on a respective device or an IT system connected to the respective device using a virtual test environment (collectively referred to herein as product systems).

Background

Recently, an increasing number of computer software products is used both for personal needs and for business needs in the form of applications, throughout the present patent document simply called "apps". Such apps may be used in a mobile context as well as on cloud computing platforms and "on premise" and may provide a specific set of functions. Further, such apps may be used in an industrial environment to analyze, monitor, operate and/or control the respective device.

The present invention generally relates to the management of such apps comprising a trained function, especially testing the deployability of such apps on a respective device or an IT system connected to the respective device using a virtual test environment.

Currently, there exist product systems and solutions which support managing apps comprising trained functions. Such product systems may benefit from improvements.

Summary

Variously disclosed embodiments comprise methods and computer systems that may be used to facilitate managing an app, especially testing the deployability of an app comprising a trained function on a respective device or an IT system connected to the respective device using a virtual test environment.

According to a first aspect of the invention, a computer-implemented method of managing an app comprising a trained function is suggested. Herein the app is to be deployed on a respective device, or an IT system connected to the respective device, wherein the app when deployed on the respective device or the IT system is configured to:

- receive input data relating to the respective device and
- apply the trained function to the input data to generate output data for analyzing, monitoring, operating and/or controlling the respective device.

The suggested computer-implemented method of managing an app comprising a trained function may comprise:

- embedding the trained function in the app;
- running the app in a virtual test environment comprising characteristics of the respective device or the IT system; and
- identifying the app as deployable on the respective device or the IT system, if running the app in the virtual test environment is successful.

According to a second aspect of the invention, a computer system may be arranged and configured to execute the steps of this computer-implemented method of managing an app comprising a trained function. Herein the app is to be deployed on a respective device, or an IT system connected to the respective device, wherein the app when deployed on the respective device or the IT system is configured to:

- receive input data relating to the respective device and
- apply the trained function to the input data to generate output data for analyzing, monitoring, operating and/or controlling the respective device.

In particular, the described computer system may be arranged and configured to execute the following steps:

- embedding the trained function in the app;
- running the app in a virtual test environment comprising characteristics of the respective device or the IT system; and
- identifying the app as deployable on the respective device or the IT system, if running the app in the virtual test environment is successful.

According to a third aspect of the invention, a computer program product may comprise computer program code which, when executed by a computer system, cause the computer system to carry out this computer-implemented method of managing an app comprising a trained function.

According to a fourth aspect of the invention, a computer-readable medium may comprise computer program code which, when executed by a computer system, cause the computer system to carry out this computer-implemented method of managing an app comprising a trained function. By way of example, the described computer-readable medium may be non-transitory and may further be a software component on a storage device.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the spirit and scope of the disclosure in its broadest form.

Also, before undertaking the detailed description below, it should be understood that various definitions for certain words and phrases are provided throughout this patent document and those of ordinary skill in the art will understand that such definitions apply in many, if not most, instances to prior as well as future uses of such defined words and phrases. While some terms may comprise a wide variety of embodiments, the appended claims may expressly limit these terms to specific embodiments.

Brief description of the drawings

Figs. 1-5    illustrate a functional block diagram of an example system that facilitates managing an app comprising a trained function in a product system, respectively.

Fig. 6    illustrates a flow diagram of an example methodology that facilitates managing an app comprising a trained function in a product system.

Fig. 7    illustrates a functional block diagram of another example system that facilitates managing an app comprising a trained function in a product system.

Fig. 8    illustrates a flow diagram of another example methodology that facilitates managing an app comprising a trained function in a product system.

Fig. 9    illustrates an embodiment of an artificial neural network.

Fig. 10    illustrate an embodiment of a convolutional neural network.

Fig. 11    illustrates a block diagram of a data processing system in which an embodiment can be implemented.

Detailed description

Various technologies that pertain to systems and methods for managing an app comprising a trained function in a product system will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present patent document will be described with reference to exemplary non-limiting embodiments.

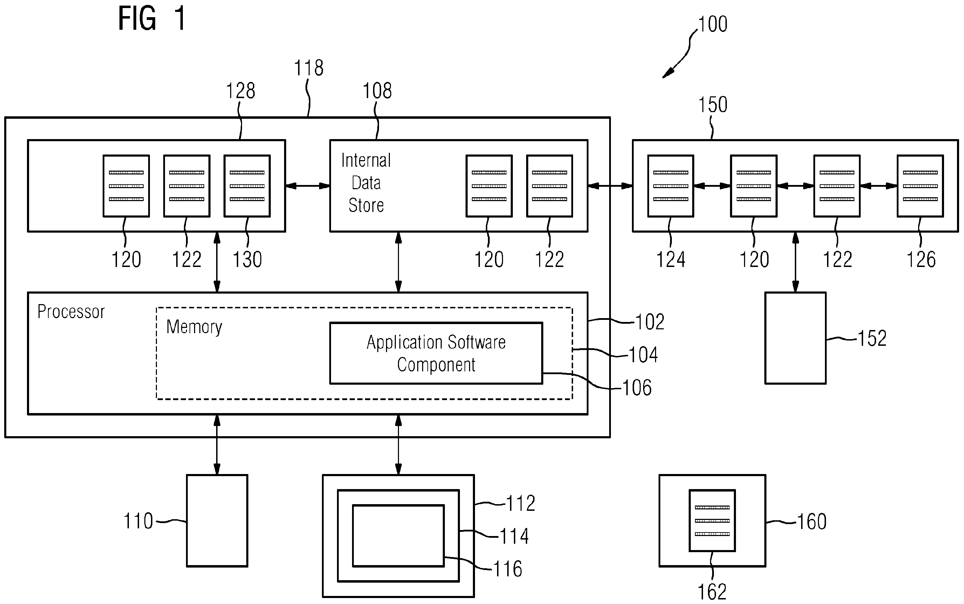

With reference to Fig. 1, an example computer system or data processing system 100 is illustrated that facilitates managing an app 120, especially testing the deployability of an app 120 comprising a trained function 122 on a respective device 150 or an IT system 152 connected to the respective device 150 using a virtual test environment 128. The computer system or data processing system 100 may comprise an app management platform 118. The processing system 100 or the app management platform 118 may comprise at least one processor 102 that is configured to execute at least one application software component 106 from a memory 104 accessed by the processor 102. The application software component 106 may be configured (i.e., programmed) to cause the processor 102 to carry out various acts and functions described herein. For example, the described application software component 106 may comprise and/or correspond to one or more components of an application that is configured to provide and store output data in a data store 108 such as a database.

It should be appreciated that it can be difficult and time-consuming to manage an app 120 comprising a trained function 122 in complex application and industrial environments. For example, advanced coding knowledge of users or IT experts may be required, or selections of many options need to be made consciously, both involving many manual steps, which is a long and not efficient process.

To enable the enhanced management of an app 120 comprising a trained function 122, the described product system or processing system 100 may comprise at least one input device 110 and optionally at least one display device 112 (such as a display screen). The described processor 102 may be configured to generate a GUI 114 through the display device 112. Such a GUI 114 may comprise GUI elements such as buttons, text boxes, images, scroll bars) usable by a user to provide inputs through the input device 110 that may support managing the app 120.

In an example embodiment, the app 120 may be to be deployed on a respective device 150 or an IT system 152 connected to the respective device 150. In some examples, the respective device 150 and the IT system 152 may be physically connected or communicatively connected or connected such, that the IT system 152 may at least detect the input data 124 from the respective device 150, e.g., by optically inspecting the respective device 150. The respective device 150 may, in some examples, be or comprise a sensor, an actuator, such as an electric motor, a valve or a robot, an inverter supplying an electric motor, a gear box, a programmable logic controller (PLC), a communication gateway, and/or other parts or components relating to industrial automation products and industrial automation in general. The respective device 150 may be part of a complex production line or production plant, e.g., a bottle filing machine, conveyor, welding machine, welding robot, etc. In some examples, the respective device may be a smartphone, smartwatch, handheld, pad, laptop or the like, or a desktop device, e.g., including desktop computers, or other "smart" devices, e.g., smart television sets, fridges, home or industrial automation devices, wherein smart television sets may e.g., be a television set with integrated Internet capabilities or a set-top box for television that offers more advanced computing ability and connectivity than a contemporary basic television set.

Further, by way of example, the IT system 152 may be or comprise a manufacturing operation management (MOM) system, a manufacturing execution system (MES), and enterprise resource planning (ERP) system, a supervisory control and data acquisition (SCADA) system, or any combination thereof. In some examples, if the respective device 150 belongs to a lower level of the automation pyramid, such as the sensor/actuator or the field level, then the IT system 152 may belong to a higher level of the automation pyramid, such as field level or the control level.

In some more exotic examples, the IT system 152 may be or comprise a smartphone, smartwatch, handheld, pad, laptop or the like and the respective device 150 may be a human, e.g., the end user of the IT system, or an animal, wherein the human's or the animal's health, behavior, etc. may be analyzed or monitored using the trained function 122 and the app 120.

In some examples, the app 120 may be understood as deployed on the respective device 150 or the IT system 152 if the activities are completed which are required to make this app 120 available for use on the respective device 150 or the IT system 152 by an end user using the deployed app 120 on his or her respective device 150. The app deployment process may comprise several interrelated activities with possible transitions between them. These activities may occur at the producer side ("developer") or at the consumer side ("end user") or both. In some examples, the app deployment process may comprise at least the release of the app 120 and the installation and the activation of the app 120. The release activity may follow from the completed development process and is sometimes classified as part of the development process rather than deployment process. It may comprise operations required to prepare a system (here: e.g., the app management platform 118 or an on-line app store) for assembly and transfer to the computer system(s) (here: e.g., the respective device 150 or IT system 152) on which it will be run in production. Therefore, it may sometimes involve determining the resources required for the system to operate with tolerable performance and planning and/or documenting subsequent activities of the deployment process. For simple systems, the installation of the app 120 may involve establishing some form of command, shortcut, script or service for executing the software (manually or automatically) of the app 120. For complex systems, it may involve configuration of the system - possibly by asking the end user questions about its intended use, or directly asking them how they would like it to be configured - and/or making all the required subsystems ready to use. Activation may be the activity of starting up the executable component of software or app 120 for the first time (which is not to be confused with the common use of the term activation concerning a software license, which is a function of Digital Rights Management systems.)

The app 120 may, e.g., be a condition monitoring application to analyze and/or monitor the status of the respective device 150 or of a production step carried out by the respective device 150. In some examples, the app 120 may be an operating application or a control application to operate or control the respective device 150 or the production step carried out by the respective device 150. The trained function 122 may be embedded in the app 120, e.g., to derive status information of the respective device 150 or the respective production step in order to derive operating or control information for the respective device 150 or the respective production step. The app 120 may then be deployed on the respective device 150 or the IT system 152. Such an app 120 may sometimes be called an edge runtime artifact, especially if the respective device 150 is an edge device arranged in the sensor/actuator level or the field level.

In some examples, the app 120 may - when deployed on the respective device 150 or the IT system 152 - be configured to receive input data 124 relating to the respective device 150 and apply the trained function 122 to the input data 124 to generate output data 126 for analyzing, monitoring, operating and/or controlling the respective device 150.

Herein, the respective device 150 or the IT system 152 may receive input data 124 and then provided the input data 124 to the app 120. In some examples, the input data 124 may directly originate from the respective device 150 on which the app 120 is deployed so that the respective device 150 directly provides the input data 124 to the app 120. The input data 124 may then be processed with help of the trained function 122 to generate output data 126, wherein the trained function 122 may, e.g., be comprised by an algorithm or generally a method encoded in the app 120 which is suitable for analyzing, monitoring, operating and/or controlling the respective device 150 making use of the input data 124. In some examples, the app is to be deployed on a respective device 150 or an IT system 152 connected to the respective device 150 to receive input data 124 relating to the respective device 150 and apply the trained function 122 to the input data 124 to generate output data 126 for analyzing, monitoring, operating and/or controlling the respective device 150.

It should be appreciated that in some examples, the application software component 106 and/or the processor 102 may be configured to embed the trained function 122 in the app 120. This may, in some examples, comprise providing suitable input and output interfaces connecting the rest of the app 120 and the trained function 122 so that input data 124 which is available to the app 120 is provided to the trained function 122 to generate the output data 126. The output data 126 may then be available to the rest of the app 120 via interfaces which may allow for using the output data 126 to analyze, monitor, operate and/or control the respective device 150. In some examples, embedding the trained function 122 in the app 120 may correspond to transforming an artificial intelligence artifact (corresponding to the trained function 122) into an edge runtime artifact (corresponding to the app 120).

Embedding and/or transforming the trained function 122 into the app 120 may, e.g., be done using the "Open Neural Network Exchange" (ONNX), an open-source artificial intelligence ecosystem establishing open standards for representing machine learning algorithms and software tools. This step may, in some examples, comprise a feature transformation of the trained function 122. Generally, the model scoring - which may be considered as part of the inference of the machine learning or trained function 122 - may take place when the trained function 122 or the app 120 is put into action on (live) input data 124 to produce (actionable) output data 126. The data processing by the machine learning model or trained function 122 is often referred to as "scoring," so one can say that the machine learning model or trained function 122 scores the input data 124, and the output data 126 is a score. By suitably embedding the trained function 122 in the app 120 (and optionally an app algorithm making use of the output of the trained function 122), meaningful output data 126 for analyzing, monitoring, operating and/or controlling the respective device 150 may be generated by applying the trained function 122 to the input data 124.

It should be appreciated, that in some examples, embedding the trained function 122 in the app 120 and subsequently deploying the app 120 on the respective device 150 or the IT system 152 may require at least three components in addition to the trained function 122: one or more data sources (e.g., the respective device 150 or the IT system 152, providing the input data 124), a system to host the machine learning model or trained function 122, and one or more data destinations (here: the respective device 150 or the IT system 152). The host system for the machine learning model or the trained function 122 may accept input data 124 from the data sources and may input the input data 124 into the machine learning model or the trained function 122. In some examples, it may be the host system that may provide the infrastructure to turn the code in the machine learning model or the trained function 122 into a fully operational application or app 120. After output data 126 is generated from the machine learning model or the trained function 122, the host system may then send that output data 126 to the data destinations. The host system may be, for example, a web application that accepts data input via a REST interface, or a stream processing application that takes an incoming feed of data, e.g., from the respective device 150, the IT system 152 or Apache Kafka (e.g., connected to the respective device 150), to process many data points per second.

In some examples, the application software component 106 and/or the processor 102 may further be configured to run the app 120 in a virtual test environment 128 comprising characteristics 130 of the respective device 150 or the IT system 152. It should be appreciated that in some examples, the virtual test environment 128 is not comprised by the respective device 150 or the IT system 152 but is rather comprised by a separate computation device and is, e.g., cloud based. Herein, the separate computation device may be located remotely from the respective device 150 or the IT system 152. Also, in further examples, the virtual test environment 128 does not involve the respective device 150 or the IT system 152 or identically (or similarly) constructed devices or systems. Rather, in some examples, the virtual test environment 128 may be provided by the separate computation device which may be a computing center which may not be operated specifically for the respective device 150, the IT system 152 and/or analyzing, monitoring, operating and/or controlling the particular respective device 150 (only) .

It should further be appreciated that the virtual test environment 128 may involve hardware virtualization or generally virtualization in the sense of creating a virtual (rather than actual) version of something (here: the respective device 150 or the IT system 152), including virtual computer hardware platforms, storage devices, and computer network resources. In some examples, the virtual test environment 128 is configured for allowing for virtually testing running the app 120 on the respective device 150 or the IT system 152. E.g., the virtual test environment 128 may be configured such that the real behavior of the app 120 and/or the trained function 122 running on the real, respective device 150 or the real IT system 152 may be virtually tested, e.g., forecasted, predetermined or tested, however, without using a real device 150 or a real IT system 152. Accordingly, in some examples, the characteristics 130 together with the virtual test environment 128 may be chosen and configured such that the real behavior of the trained function 122 and/or of the app 120 running on the real, respective device 150 or the real IT system 152 may be forecasted, predetermined or tested, but without using a real device 150 or a real IT system 152. In some examples, the characteristics 130 may comprise information on the characteristics or properties of the real, respective device 150 and/or the real IT system 152, such as computing power, memory size, etc., which may be of relevance when running the app 120 on the respective device 150 or the IT system 152.

In this context, the above-mentioned host system hosting the machine learning model or trained function 122 may be the virtual test environment 126 or a component comprised by the virtual test environment 126. Consequently, the virtual test environment 126 or one of its components may allow for the above-explained model scoring and/or inferencing of the machine learning or trained function 122, e.g., for testing the deployability of the app 120. For such testing purposes, the trained function 122 may suitably be embedded in the app 120.

In some examples, the app management platform 118 may comprise the virtual test environment 128 in which the app 120, the trained function 122 and the characteristics 130 of the respective device 150 or the IT system 152 are available.

By way of example, the application software component 106 and/or the processor 102 may further be configured to identify the app 120 as deployable on the respective device 150 or the IT system 152, if running the app 120 in the virtual test environment 128 is successful.

There may be a plurality of criteria in the context of a successful test of running the app 120 in the virtual test environment 128, wherein for the identification of a successful test, one or more of such criteria may be applied. For example, one criterion may be that running the app 120 in the virtual test environment 128 does not result in some kind of crash of the app 120 of the virtual test environment 128, e.g., a memory dump, a core dump, etc., or generally generating error messages, e.g., when running the app 120 in the virtual test environment 128. Other examples of such criteria to identify a successful test are explained below.

The selection of one or more of the potential criteria to identify a successful test may depend on characteristics of the respective device 150 or of the IT system 152, but also on the nature or characteristics of the trained function 122, the app 120 and whether the output data 126 is used for analyzing, monitoring, operating or controlling the respective device 150. In either case, one or more of the potential criteria to identify a successful test may be chosen and, if the respective criterion is fulfilled in a given test of running the app 120 in the virtual test environment 128, the app 120 may be identified as deployable on the respective device 150 or the IT system 152.

In further examples, the characteristics 130 and/or the virtual test environment 128 may comprise at least one of:

- a respective test software environment corresponding to the software environment of the respective device 150 or the IT system 152;
- respective test hardware parameters corresponding to the hardware parameters of the respective device 150 or the IT system 152 comprising computation and storage parameters of the respective device 150 or the IT system 152;
- a respective test interface corresponding to the respective interface of the respective device 150 or the IT system 152;
- respective test configuration parameters corresponding to configuration parameters of the app 120 adapted for running the app 120 on the respective device 150 or the IT system 152;
- or any combination thereof.

Generally, in some examples, the characteristics 130 together with the virtual test environment 128 may be chosen and configured such that the real behavior of the trained function 122 and/or of the app 120 running on the real, respective device 150 or the real IT system 152 may be forecasted, predetermined or tested, but without using a real device 150 or a real IT system 152. In this context, a respective test software environment corresponding to the software environment of the respective device 150 or the IT system 152 may be provided in the virtual test environment 128, e.g., in form of the characteristics 130. The respective test software environment 128 may, in some examples, comprise the respective device's 150 runtime along with its operating system or correspondingly, the IT system's 152 runtime along with its operating system. In further examples, the respective test software environment may further include libraries, firmware, compilers or other applications available or running on the respective device 150 or the IT system 152 along with the app 120. Further, the respective test software environment may comprise software interfaces between the different software components of the respective device 150 or IT system 152, wherein the software interfaces may be arranged between two of the following items: the runtime, the operating system, the app 120, or other software applications available on the respective device 150 or the IT system 152. In some examples, the software environment of the respective device 150 or the IT system 152 may be containerized so that the respective test software environment may also be containerized, and the interfaces may comprise interfaces between the containers. Generally, the respective test software environment may correspond and take into account such software components of the respective device 150 or the IT system 152 which may affect the proper performance or operation of the app 120 and/or the trained function 122 on the respective device 150 or the IT system 152.

Further, respective test hardware parameters corresponding to the hardware parameters of the respective device 150 or the IT system 152 may be provided in the virtual test environment 128, e.g., in form of the characteristics 130. These test hardware parameters may comprise computation resources, such as number, type and/or performance of processor(s), e.g., central processing unit (CPU), graphics processing unit (GPU), field-programmable gate array (FPGA), multi-core processor, etc., and storage resources, such as number, type and/or performance of memory device(s), e.g., random-access memory (RAM), hard disk, programmable read-only memory (PROM), etc. Generally, the respective test hardware parameters may correspond and take into account such hardware parameters of the respective device 150 or the IT system 152 which may affect the proper operation of the app 120 and/or the trained function 122 on the respective device 150 or the IT system 152.

In some examples, a respective test interface corresponding to the respective interface of the respective device 150 or the IT system 152 may be provided to the virtual test environment 128, e.g., in form of the characteristics 130. This test interface may, e.g., comprise an input-/output module of the respective device 150 or the IT system 152. In further examples, the test interface may also comprise characteristics of additional hardware or software components (communicatively) connected to the respective device 150 or IT system 152, wherein these additional characteristics may comprise corresponding additional test software environment, test hardware parameters and/or test interface(s) of the additional hardware or software components. In further examples, the respective test interface may comprise one or more interfaces of the respective device 150 or the IT system 152 (or of the additional hardware or software component). Generally, the respective test interface may correspond and take into account such an interface of the respective device 150 or the IT system 152 which may affect the proper operation of the app 120 and/or the trained function 122 on the respective device 150 or the IT system 152.

In further example, respective test configuration parameters corresponding to configuration parameters of the app 120 adapted for running the app 120 on the respective device 150 or the IT system 152 may be provided to the virtual test environment 128. These test configuration parameters may correspond to settings, preferences or other software environment parameters chosen or adapted for running the app 120 on the respective device 150 or the IT system 152. Generally, the respective test configuration parameters may correspond and take into account such configuration parameters of the app 120 adapted for running the app 120 on the respective device 150 or the IT system 152 which may affect the proper operation of the app 120 and/or the trained function 122 on the respective device 150 or the IT system 152.

It should be appreciated that in some examples, the characteristics 130 of the respective device 150 or the IT system 152 may comprise, or may correspond and take into account, the mentioned, respective test software environment, respective test hardware parameters, and respective test interface of the respective device 150 or the IT system 152.

It should be appreciated, that in some examples, the application software component 106 and/or the processor 102 may further be configured to further provide device operation data to the virtual test environment 128, wherein the device operation data relate to data generated during an operation of the respective device 150; and to run the app 120 in the virtual test environment 128 comprising the provided device operation data.

The device operation data may, for example, comprise sensor or a control data which may typically be observed when operating the respective device 150. The device operation data may, in some examples, be original data generated during the operation of the respective device 150, wherein the device operation data may comprise data input to the respective device 150 and/or data output from the respective device 150 during its operation. In further examples, the device operation data may be generated by simulating the operation of the respective device 150. In such examples, a dynamic generation of device operation data may be achieved which may allow for testing particularly critical operation scenarios of the app 120, the trained function 122 and/or the corresponding device 150 and, e.g., carry out more or harder tests if one test scenario suggests that a certain test is close to fail.

If the device operation data comprises data output from the respective device 150 during its operation, running the app 120 in the virtual test environment 128 may be considered successful, if during running the app 120 in the virtual test environment 128 outputs test output data which corresponds within acceptable deviations to the provided data output from the respective device 150 during its operation. In some examples, running the app 120 in the virtual test environment 128 may be considered successful, if - in the virtual test environment 128 - the processing load of running the app 120 and the trained function 122 may still satisfactorily be managed by the respective device 150 or the IT system 152. This may, e.g., be the case if the app 120 or the trained function 122 may be processed by the respective device 150 or the IT system 152 - in the virtual test environment 128 - within an expected processing time so that the output data 126 may be obtained within reasonable delays to allow for a useful analysis, monitoring, operation and/or control of the respective device 150.

In some examples, the app 120 and the trained function 122 may be provided with device operation data which may be the same kind of input data 124, and hence realistic input data 124, which may occur when the app 120 and the trained function 122 are actually deployed on the respective device 150 or the IT system 152. In further examples, the device operation data may be manipulated particularly to carry out a sort of stress test, e.g., by stretching, squeezing, and/or compressing the device operation data or the input data 124.

In some examples, the app 120 may further comprise a preprocessing function 132 for preprocessing the input data 124 prior to applying the trained function 122 to the input data 126, wherein the application software component 106 and/or the processor 102 may further be configured to embed the preprocessing function 132 in the app 120; and to run the app 120 comprising the preprocessing function 132 and the trained function 122 in the virtual test environment 128.

The preprocessing function 132 may, e.g., be used to process the input data 124 to extract essential data from the input data 124. This may particularly be useful if the input data 124 comprises large amounts of data, such as repetitive data, time-series data, etc. In some examples, the preprocessing function 132 may involve a data transform, such as a Fourier transform, a Laplace transform, data filters, high-pass, band-pass or low-pass filters, statistical functions, such as calculating one of the Pythagorean means, etc.

In some examples, running the app 120 comprising the preprocessing version 132 in the virtual test environment 128 may be considered successful, if - in the virtual test environment 128 - the processing load of running the app 120, the preprocessing function 132 and the trained function 122 may still satisfactorily be managed by the respective device 150 or the IT system 152. This may, e.g., be the case if the app 120 or the trained function 122 may be processed by the respective device 150 or the IT system 152 - in the virtual test environment 128 - within an expected processing time so that the output data 126 may be obtained within reasonable delays to allow for a useful analysis, monitoring, operation and/or control of the respective device 150. In other examples, this may be the case if the app 120, the preprocessing function 132 or the trained function 122 provide test output data which corresponds within acceptable deviations to expected output data 128.

It should further be appreciated, that in some examples, the application software component 106 and/or the processor 102 may further be configured to identify the app 120 as successfully tested app 120 if the performance of the app 120 in the virtual test environment 128 corresponds to an expected performance of the app 120 running on the respective device 150 or the IT system 152.

In some examples, an expected performance of the app 120 running on the respective device 150 or the IT system 152 may simply be such, that the app 120 does not freeze or crash in the virtual test environment 128 during receiving the input data 124 and generating the output data 126 by applying the trained function 122 to the input data 124. In further examples, the expected performance may comprise that the respective device 150 or the IT system 152 may still be operated in the virtual test environment 128 within acceptable boundaries, such as acceptable communication or operation latency. The expected performance may, e.g., comprise generating the output data 126 after receiving the input data 124 in the virtual test environment 128 within a given time interval. The given time interval may be chosen such that the respective device 150 or the IT system 152 may still reasonably perform its operation of analyzing, monitoring, operating and/or controlling the respective device 150. In some examples the given time interval may be chosen according to an estimated maximum processing time for processing the app and/or the trained function 122 on the respective device 150 or the IT system 152, whereby the above-mentioned characteristics 130 may be taken into account for estimating the maximum processing time.

This sort of test involving an expected performance may, in some examples, be among the few available tests in a non-classical or non-deterministic domain of machine learning which may imply that for various given input data 124, the corresponding output data 126 of the trained function 122 may not be known or predictable beforehand. Hence, in this non-classical or non-deterministic domain, similar input data 124 (e.g., two or more sets of input data 124 which are similar) processed by the trained function 122 may lead to not similar output data 126 (e.g., two or more sets of output data 126 which are comparably distinct from each other).

In further examples, the application software component 106 and/or the processor 102 may further be configured to identify the app 120 as successfully tested app 120 if the operability of the app 120 in the virtual test environment 128 corresponds to an expected operability of the app 120 running on the respective device 150 or the IT system 152.

Herein, the operability of the app 120 may be understood as the correct operation or correct function of the app 120. This may, in some examples, include that the app 120 running in the virtual test environment 128 provides correct output data 126 for given input data 124. This sort of test may, in some examples, only be available in a classical or deterministic domain of machine learning and, e.g., involve that for given input data 124, the output data 126 of the trained function 122 is known or may be calculated beforehand and may hence be used for validating a correct function or operation of the trained function 122 and hence of the app 120. In less stringent examples, the operability of the app 120 may be accepted if the output data 126 generated in the virtual test environment 128 is of the expected order of magnitude, has the expected physical unit(s) or mathematical dimension(s).

In some examples, the application software component 106 and/or the processor 102 may further be configured to identify the app 120 as successfully tested app 120 if the compatibility of the app 120 in the virtual test environment 128 corresponds to an expected compatibility of the app 120 running on the respective device 150 or the IT system 152.

The compatibility of the app 120 and hence of the trained function 122 may, in some examples, imply a proper setup and integration of the app 120 and the trained function 122 in the software environment or of the interface(s) of the respective device 150 or the IT system 152. With respect to the software environment, the correct interplay of the trained function 122 and the app 120 with the runtime, the operating system and/or libraries, firmware or compilers of the respective device 150 or the IT system 152 may also be comprised by the compatibility. Further the compatibility of the app 120 and the trained function 122 may depend on a proper configuration of the configuration parameters of the app 120 adapted for running the app 120 on the respective device 150 or the IT system 152. These aspects of the compatibility may be tested in the virtual test environment 128 and the results may be compared to an expected compatibility to determine whether a test is successful. Generally, the expected compatibility may imply that the trained function 122 and the app 120 behaving in the virtual test environment 128 as expected beforehand concerning the real behavior of the app 120 and/or the trained function 122 running on the real, respective device 150 or the real IT system 152.

It should also be appreciated that in further examples, the application software component 106 and/or the processor 102 may further be configured to provide expected output data 126A relating to a successful run of the app 120 on the respective device 150 or the IT system 152; to run the app 120 in the virtual test environment 128 to generate test output data 126B; and to identify the app 120 as successfully tested app 120 if the generated test output data 126B corresponds to the provided expected output data 126A.

In these examples, test output data 126B is generated by running the app 120 and the trained function 122 in the virtual test environment 128. This test output data 126B may then be compared with expected output data 126A relating to a successful run of the app 120 on the respective device 150 or the IT system 152. If the test output data 126B corresponds, e.g., sufficiently well or within acceptable deviation boundaries, with the expected output 126A, the app 120 may be identified as successfully tested app 120. In some examples, test input data 124A may be used to run the test of the app 120 in the virtual test environment 128, wherein the test input data 124A may correspond sufficiently well or be identical with corresponding input data 124 on which the expected output data 126A is based.

In some examples, the described comparison between the generated test output data 126B and the provided expected output data 126A may be used to test above-explained operability of the app 120.

This sort of test may, in some examples, only be available in a classical or deterministic domain of machine learning and, e.g., involve that for given input data 124, the output data 126 of the trained function 122 is known or may be calculated beforehand. In less stringent examples, the insufficient correspondence between the generated test output data 126B and the provided expected output data 126A may be given if the two sets of output data 126A and 126 have the same order of magnitude, has the same physical unit(s) or mathematical dimension(s).

In further examples, the application software component 106 and/or the processor 102 may further be configured to provide a typical operation scenario of the respective device 150 or the IT system 152, the typical operation scenario comprising typical input data 124A and corresponding typical expected output data 126C; to run the app 120 in the virtual test environment 128 according to the typical operation scenario and to use the typical input data 124A to generate typical test output data 126D; and to identify the app 120 as successfully tested app 120 if the generated typical test output data 126D corresponds to the provided typical expected output data 126C.

The typical operation scenario may correspond to a regular operation of the respective device 150, and may, in some examples, comprise typical failure modes of operation of the respective device 150. Hence, the typical operation scenario may depend on the kind of the respective device 150. If the respective device is an electric motor (or a gearbox, or the like respective devices 150 mentioned above), the typical operation scenario may correspond to a regular operation of the electric motor (or the gearbox, etc.) comprising certain time-dependent input voltages as typical input data 124A and, e.g., certain time-dependent electric currents and/or generated torques, rotor speeds, or the like as typical expected output data 126C (correspondingly for the gearbox: input torque or rotational speed, etc. as typical input data 124A and output torque, rotational speed, lubricant temperature or vibrations, etc. as typical expected output data 126C; and corresponding typical input data 124A and typical expected output data 126 for the like respective devices 150 mentioned above). The typical failure modes may, e.g., comprise for a gearbox a too hot or low-quality lubricant or a damaged shaft bearing, for an electric motor a damaged rotor bearing, for electronic devices damaged or malfunctioning communication interfaces, etc.

For at least one or, in some examples, several of such typical operation scenario(s), the typical input data 124A and the typical expected output data 126 C for a given respective device 150 may be known beforehand. The typical input data 124A may then be used to run the app 120 in the virtual test environment 128 to generate typical test output data 126D and then compare the generated, typical test output data 126D with the typical expected output data 126C. If the typical test output data 126D corresponds, e.g., sufficiently well or within acceptable deviation boundaries, with the expected typical output 126C, the app 120 may be identified as successfully tested app 120.

In some examples, the application software component 106 and/or the processor 102 may further be configured to deploy the deployable app 120 on the respective device 150 or the IT system 152 such that the app 120 may be used for analyzing, monitoring, operating and/or controlling the respective device 150.

Herein, an app 120 may be understood as deployed if the activities are completed which are required to make this app 120 available for use on the respective device 150 or the IT system 152 by an end user using the deployed app 120 on his or the respective device 150 or the IT system 152. The app deployment process may comprise several interrelated activities with possible transitions between them. These activities may occur at the producer side ("developer") or at the consumer side ("end user") or both. In some examples, the app deployment process may comprise at least the release of the app 120 and the installation and the activation of the app 120. The release activity may follow from the completed development process and is sometimes classified as part of the development process rather than deployment process. It may comprise operations required to prepare a system (here: e.g., the app management platform 118 or an on-line app store) for assembly and transfer to the computer system(s) (here: e.g., the respective device 150 or the IT system 152) on which it will be run in production. Therefore, it may sometimes involve determining the resources required for the system to operate with tolerable performance and planning and/or documenting subsequent activities of the deployment process. For simple systems, the installation of the app 120 may involve establishing some form of command, shortcut, script or service for executing the software (manually or automatically) of the app 120. For complex systems, it may involve configuration of the system - possibly by asking the end user questions about its intended use, or directly asking them how they would like it to be configured - and/or making all the required subsystems ready to use. Activation may be the activity of starting up the executable component of software or app 120 for the first time (which is not to be confused with the common use of the term activation concerning a software license, which is a function of Digital Rights Management systems.)

In this context, a successfully tested and hence deployable app 120 may be deployed on the respective device 150 or the IT system 152. To this end, the app management platform 118 may transmit the deployable app 120 to the respective device 150 or the IT system 152 and, in some cases, trigger the deployment of the app 120 on the respective device 150 or the IT system 152.

It should be appreciated that in some examples, the only impact of the virtual test environment 128 for the subsequent deployment of app 120 may be the testing and - upon successful test - identification of the app 120 as deployable. Hence, there may be no further information from the virtual test environment 128 which may be transmitted to the respective device 150 or to the IT system 152 during the deployment or the operation of the app 120. In some examples, the prepared and provided virtual test environment 128 may therefore exclusively be used for the described testing purposes to identify whether the app 120 is deployable on the respective device 150 or the IT system 152. In such examples, the prepared and provided virtual test environment 128 may be deleted (even without any further reuse) if an app 120 has successfully been tested and identified as deployable. In further examples, the respective test software environment, the respective test hardware parameters, the respective test interface, and the respective test configuration parameters may not be transmitted to the respective device 150 or the IT system 152 during the deployment or the operation of the app 120 but may rather be deleted (without any further reuse) if an app 120 has successfully been tested and identified as deployable.

Once the app 120 has been deployed on the respective device 150 or the IT system 152, may be used for analyzing, monitoring, operating and/or controlling the respective device 150.

It should also be appreciated, that in such examples, the application software component 106 and/or the processor 102 may further be configured to analyze, monitor, operate and/or control the respective device 150 using the deployed app 120.

In some examples, the application software component and/or the processor of the respective device 150 or of the IT system 152 may be configured to analyze, monitor, operate and/or control the respective device 150 using the deployed app 120. To this end, the application software component and/or the processor of the respective device 150 or of the IT system 152 may be configured to receive the app 120 from the app management platform 118 and to deploy the app 120 on the respective device 150 or the IT system 152.

In further examples, the app 120 may be used in the context of welding, especially of car bodies in the car manufacturing industry. To this end, the respective device 150 may correspond to a welding robot or welding machine which provides or generates input data 124 related to welding parameters. The input data 124 may be processed by the trained function 122 embedded in the app 120 to generate output data 126, wherein the app 120 may be deployed on the welding robot or an IT system 152 connected to the welding robot. The output data 126 may be used to analyze or monitor the welding robot or the welding process or the output data 126 may be used to operate or control the welding robot.

In further examples, the application software component 106 and/or the processor 102 may further be configured to replace the trained function 122 with an amended trained function 122' in the app 120 to obtain an amended app 120'; to run the amended app 120' in the virtual test environment 128 comprising characteristics 130 of the respective device 150 or the IT system 152; and to identify the amended app 120' as deployable on the respective device 150 or the IT system 152, if running the amended app 120' in the virtual test environment 128 is successful.

In some examples, it may be necessary to amend or update the trained function 122 to and amended trained function 122', e.g., since the input data 124 underlies a data drift which may correspond to wear or ageing of the respective device 150. The amended trained function 122' may, in some examples, be obtained by re-training the trained function 122, e.g., using updated training data reflecting the situation after the data drift, e.g., corresponding to the worn or aged respective device 150. There may, of course, be other circumstances leading to an amended trained function 122', such as an improved or simply different training algorithm for training the trained function 122, improved insight in the operation and typical malfunction scenarios of the respective device 150, etc.

The amended trained function 122' may then be embedded in the app 120 to replace the trained function 122 and to obtain an amended app 120'. The amended app 120' may then be run in the virtual test environment 128 to identify the amended app 120' as deployable on the respective device 150 or the IT system 152, if running the amended app 120' in the virtual test environment 120 is successful.

If the app 120 further comprises the above-described preprocessing function 132, there may be examples, when an update of the preprocessing function 132 to amended preprocessing function 132' may be useful. In such cases, the amended preprocessing function 132' may replace the processing function 130 and be embedded in the app 120 to obtain an amended app 120'. The amended app 120' may then be run in the virtual test environment 128 to identify the amended app 120' as deployable on the respective device 150 or the IT system 152, if running the amended app 120' in the virtual test environment 120 is successful. Of course, both the trained function 122 and the preprocessing function 132 may be amended at the same time, then be embedded in the app by replacing the previous version of the trained function 122 and the preprocessing function 132. Again, the amended app 120' may then be run in the virtual test environment 128 to identify the amended app 120' as deployable on the respective device 150 or the IT system 152, if running the amended app 120' in the virtual test environment 120 is successful. Eventually, the amended app 120' may be deployed on the respective device 150 or the IT system 152 to analyze, monitor, operate and/or control the respective device 150.

According to the arrangement illustrated in Fig. 1, the app 120 comprising a trained function 122 may be deployed on the respective device 150, which may optionally be communicatively connected to an optional IT system 152. The input data 124 and the output data 126 may be available on the respective device 150. Such scenarios may occur, in some examples, if the respective device 150 is an electronic device, such as a robot, an inverter supplying an electric motor, a PLC, a communication gateway, and/or other electronic devices or components relating to industrial automation products and industrial automation in general. Further, the respective device 150 may be a smartphone, smartwatch, handheld, pad, laptop or the like, or a desktop device, e.g., including desktop computers, or other "smart" devices, e.g., smart television sets, fridges, home or industrial automation devices, wherein smart television sets may e.g., be a television set with integrated Internet capabilities or a set-top box for television that offers more advanced computing ability and connectivity than a contemporary basic television set.

As illustrated in Fig. 1, the respective device 150 may include the trained function 122 which is embedded in the app 120 as well as input data 124 and output data 126. The respective device 150 may be in data communication with the IT system 152 and with the app management system 118. For the presented management of an app 120, especially for testing the deployability of an app 120 comprising a trained function 122 using a virtual test environment 128, the respective device 150 and the IT system 152 may be considered optional.

Fig. 1 also illustrates a computer-readable medium 160 comprising a computer program product 162 comprising computer program code which, when executed by the computer system 100 or the app management platform 118, cause the computer system 100 or the app management platform 118 to carry out the described method.

Generally, process data of industrial automation systems may be processed and analyzed directly by edge or field devices via edge apps (i.e., apps running on edge devices). Herein, the edge or field devices may correspond to the respective device 150. For example, in the area of predictive quality, edge apps may be based on artificial intelligence (AI) models, such as industrial AI applications, which may be able to recognize specific error patterns in process data on the basis of historic data. However, process data may behave very dynamic for various reasons, such as process deviations or adaptations. Especially in the area of industrial AI, such amendments or adaptations with respect to the data structure or data distribution may often require a software-related amendment of the AI-specific artifacts. This may, among others, concern the program code for data preprocessing (such as the preprocessing function 132) and/or the AI model (such as the trained function 122). In some cases, this may further require an adaptation of the program code, a retraining of the AI model, e.g., by and AI expert. In this context, AI may also be understood as machine learning (ML).

Such industrial AI apps may also be used for predictive quality use cases in the car manufacturing or automotive industry. For example, data from welding control may be analyzed to detect certain error patterns during the welding process. (The welding process may, e.g., be applied during the production of car bodies.) To this end, data may be pulled from the welding process, optionally be routed via a central interface, such as a message broker, to the edge device. On the edge device, there may optionally be a data preprocessing and a model calculation or model interference (e.g., by applying the trained function 122 on the input data 124 to generate the output data 126) by the AI app. The result of the model calculation (such as the output data 126) may then be transmitted to the connected IT system 152 or supervisory system.

As soon as data changes due to the described dynamic in the structure and/or distribution of the data, the correct operation of the AI-related artifacts of the preprocessing and/or of the AI models may no longer be safeguarded. E.g., an amendment of the data structure may lead to an erroneous preprocessing and the model calculation may be suspended for one set of input data. Further, an amendment of the data distribution (e.g., the behavior of the data changes and unknown patterns occur) may affect the AI model and its reliability and meaningfulness. As soon the incoming sets of data differ too much from the model training data, incorrect results may occur, and a model retraining may be necessary.

The adaptation of the preprocessing program code in the model retraining may be done in a separate test and development environment, e.g., in the cloud. Hence the architecture and the hardware resources may be substantially different from the later used in the productive target system, such as an edge runtime shop floor. This may lead to several problems:

- there may incompatibilities at the deployment: the software stack of the artificial intelligence specific artifacts may be erroneous or incompatible with the architecture of the target system,
- there may be performance issues: an overload of the CPU/memory capacities of the target system may lead to large inference times so that business requirements may no more be met; this may even lead to the crash of the app,
- the expectations on the functional properties of the machine learning application, such as the quality and the behavior of the application logic, may no longer be met since the behavior may be different between the development runtime and the target runtime. E.g., the execution logic may depend on the executing hardware, such as hardware-specific library components, the operating system, or the network communication. Compared with the above-described problem of incompatibilities at the deployment, the app still appears to be executable to a user, however, the results may be different than expected.

According to another approach, to avoid incompatibilities and performance problems, manual tests on the real target system are performed by edge or test experts, after program and model adaptations are completed. However, this approach involves high manual efforts, the use of real hardware and requires expert know-how which makes it expensive and time-consuming. The high time effort also avoids a fast update of an AI app as a reaction on amendments on the shop floor and hence avoids a sort of high-frequency software deployment.

Contrary to the mentioned disadvantages of other approaches, the suggested approach allows for fast and automated reaction on changes on the shop floor and allows for a high-frequency software deployment. Cloud-level artifacts may be converted into edge runtime-specific artifacts, e.g., by embedding the trained function 122 in the app 120. The production environment may be safeguarded by edge runtime-/AI-specific testing in the cloud with respect to compatibility, capacity, runtime performance, safeguarding of the input/output-relation, and/or AI-specific, functional properties. In some examples, an additional test or integration environment for the edge runtime in the cloud may not be required.

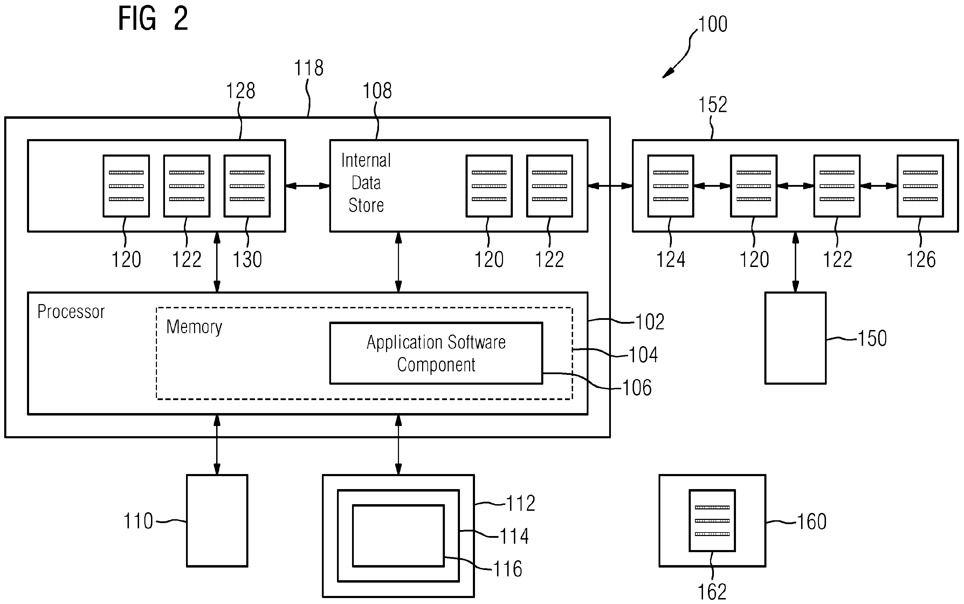

With reference to Fig. 2, another example computer system or data processing system 100 is illustrated that facilitates managing an app 120, especially testing the deployability of an app 120 comprising a trained function 122 on a respective device 150 or an IT system 152 connected to the respective device 150 using a virtual test environment 128.

According to the arrangement illustrated in Fig. 2, the app 120 comprising a trained function 122 may be deployed on the IT system 152, which may be connected to the respective device 150 or else be adapted to collect the input data 124 and the output data 126 from the respective device 150. The input data 124 and the output data 126 may be available on the IT system 152. Such scenarios may occur, in some examples, if the respective device 150 is a mechanical or electric device, such as a sensor, an electric motor, a valve, a gear box and/or other mechanical or electric parts or components relating to industrial automation products and industrial automation in general. The IT system 152 may be or comprise an inverter, a PLC, manufacturing operation management (MOM) system, a manufacturing execution system (MES), and enterprise resource planning (ERP) system, a supervisory control and data acquisition (SCADA) system, or any combination thereof.

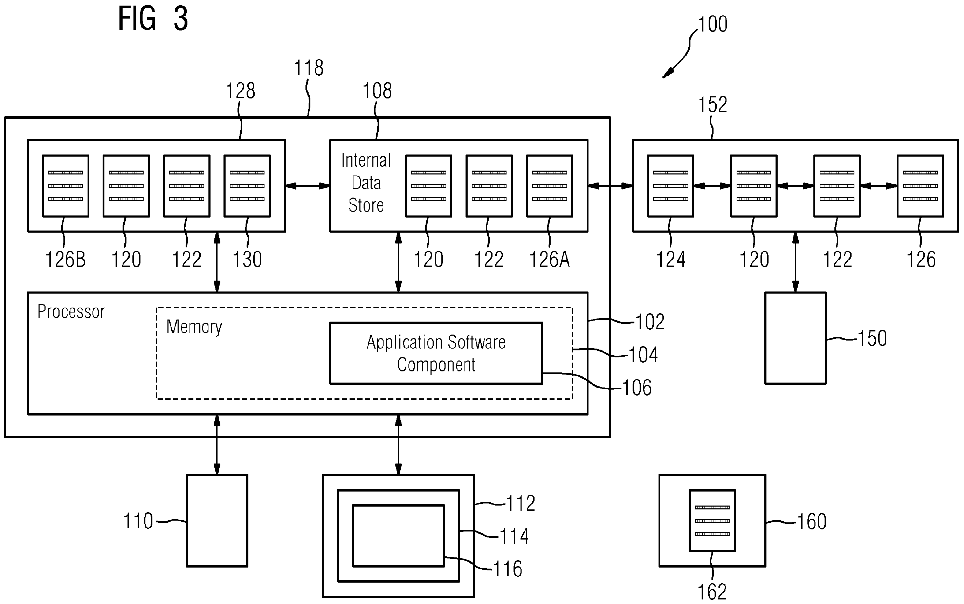

With reference to Fig. 3, yet another example computer system or data processing system 100 is illustrated that facilitates managing an app 120, especially testing the deployability of an app 120 comprising a trained function 122 on a respective device 150 or an IT system 152 connected to the respective device 150 using a virtual test environment 128.

As illustrated in Fig. 3, expected output data 126A relating to a successful run of the app 120 on the respective device 150 or the IT system 152 may be provided, wherein the expected output data 126A relates to a successful run of the app 120 on the respective device 150 or the IT system 152. The app 120 may then be run in the virtual test environment 128 to generate test output data 126B. If the generated test output data 126B corresponds to the provided expected output data 126A the app 120 may be identified as successfully tested app 120 if the generated test output data 126B corresponds to the provided expected output data 126A. Herein, a sufficient correspondence may be given if the test output data 126B corresponds, e.g., sufficiently well or within acceptable deviation boundaries, with the expected output 126A. In some examples, test input data 124A may be used to run the test of the app 120 in the virtual test environment 128, wherein the test input data 124A may correspond sufficiently well or be identical with corresponding input data 124 on which the expected output data 126A is based.

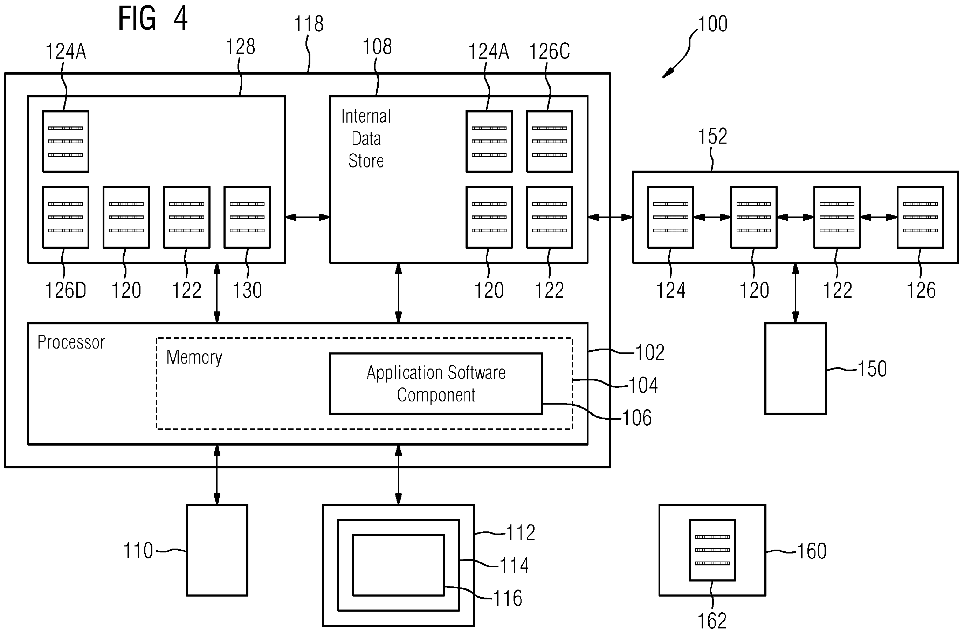

With reference to Fig. 4, yet another example computer system or data processing system 100 is illustrated that facilitates managing an app 120, especially testing the deployability of an app 120 comprising a trained function 122 on a respective device 150 or an IT system 152 connected to the respective device 150 using a virtual test environment 128.

As illustrated in Fig. 4, a typical operation scenario of the respective device 150 or the IT system 152 may be provided, the typical operation scenario comprising typical input data 124A and corresponding typical expected output data 126C. The app 120 may then be run in the virtual test environment 128 according to the typical operation scenario, wherein the typical input data 124A may be used to generate typical test output data 126D. If the generated typical test output data 126D corresponds, e.g., sufficiently well or within acceptable deviation boundaries, to the provided typical expected output data 126C., the app 120 may be identified as successfully tested app 120.

As mentioned above, the typical operation scenario may correspond to a regular operation of the respective device 150, and may, in some examples, comprise typical failure modes of operation of the respective device 150.

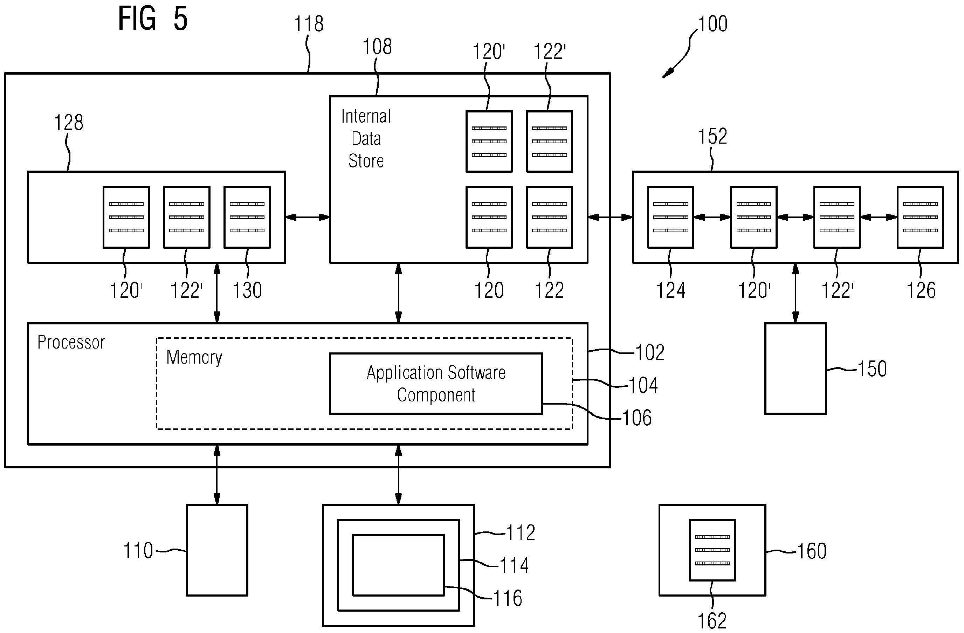

With reference to Fig. 5, yet another example computer system or data processing system 100 is illustrated that facilitates managing an app 120, especially testing the deployability of an app 120 comprising a trained function 122 on a respective device 150 or an IT system 152 connected to the respective device 150 using a virtual test environment 128.

As illustrated in Fig. 5, the trained function 122 may be replaced with an amended trained function 122' in the app 120 to obtain an amended app 120'. Then, the amended app 120' may be run in the virtual test environment 128 comprising characteristics 130 of the respective device 150 or the IT system 152. If running the amended app 120' in the virtual test environment 128 is successful, the amended app 120' may be identified as deployable on the respective device 150 or the IT system 152.

As explained above, in some examples, it may be necessary to amend or update the trained function 122 to and amended trained function 122', e.g., since the input data 124 underlies a data drift which may correspond to wear or ageing of the respective device 150. The amended trained function 122' may, in some examples, be obtained by re-training the trained function 122, e.g., using outdated training data reflecting the situation after the data drift, e.g., corresponding to the worn or aged respective device 150. That may, of course, be other circumstances leading to an amended trained function 122', such as an improved or simply different training algorithm for training the trained function 122, improved insight in the operation and to typical malfunction scenarios of the respective device 150, etc.

Eventually, the amended app 120' may be deployed on the respective device 150 or the IT system 152 to analyze, monitor, operate and/or control the respective device 150.

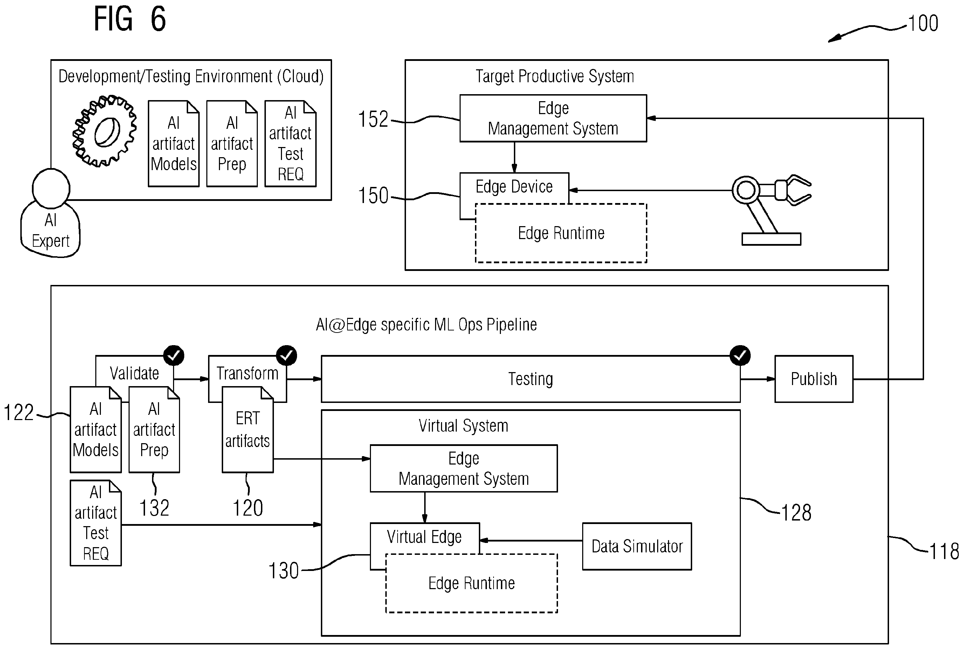

With reference to Fig. 6, a flow diagram of an example methodology is illustrated that facilitates managing an app comprising a trained function in a product system 100, especially testing the deployability of an app 120 comprising a trained function 122 on a respective device 150 or an IT system 152 connected to the respective device 150 using a virtual test environment 128.

As illustrated on the left top of Fig. 6 in the box "Development/Testing Environment (Cloud)" , artificial intelligence artifact models ("AI artifact models", such as the trained function 122), and optionally an artificial intelligence artifact preprocessing function (such as the preprocessing function 132) and optionally artificial intelligence artifact test requirements may be developed, e.g., by an artificial intelligence expert or alternatively by a computer implemented algorithm. By way of example, an existing trained function 122 may be retrained to obtain an amended trained function 122' an estimate of the process.

In a large box "AI@Edge specific MLOps Pipeline" at the bottom of Fig. 6, the trained function 122 ("artificial intelligence artifact models"), optionally along with the preprocessing function 132 ("artificial intelligence artifact preprocessing"), may be validated, wherein the trained function 122 may then be transformed into an edge-runtime artifact ("ERT artifact"), e.g., by embedding the trained function 122 in the app 120.

The app 120 may then be tested in the virtual test environment 128 comprising characteristics 130 ("virtual edge", optionally comprising an "edge runtime" and further optionally comprising a "data simulator" which may provide the above-mentioned device operation data, expected output data 126A, or typical operation scenario). To this end, the app 120 may be run in the virtual test environment 128 comprising the characteristics 130 of the respective device 150 (cf. top box "Target Protective System": "edge device"), wherein the app 120 is identified as deployable on the respective device 150, if running the app 120 in the virtual test environment 128 is successful.

Upon successful test of the app 120, the app may be published end be deployed on the respective device 150 to for analyze, monitor, operate and/or control the respective device 150, e.g., by receiving input data 124 relating to the respective device 150 and by applying the trained function 122 to the input data 124 to generate output data 126 for analyzing, monitoring, operating and/or controlling the respective device 150.

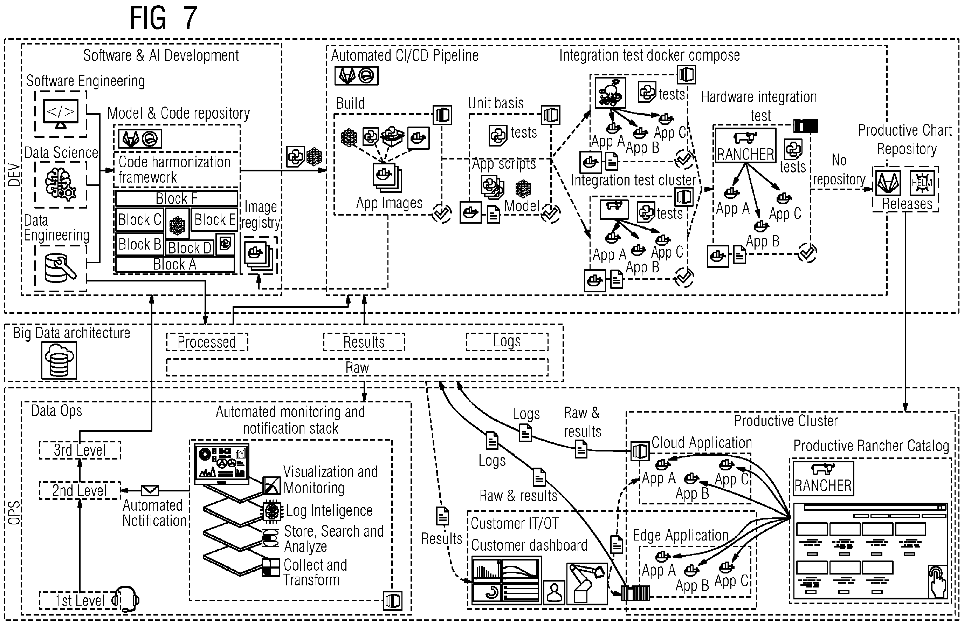

Fig. 7 illustrates a functional block diagram of another example system that facilitates managing an app comprising a trained function in a product system.

The overall architecture of the illustrated example system may be divided in development ("dev"), operations ("ops"), and a big data architecture arranged in between development and operations. Herein, dev and ops may be understood as in DevOps, a set of practices that combine software development (Dev) and IT operations (Ops). DevOps aims to shorten the systems development life cycle and provide continuous delivery with high software quality. By way of example, the trained function explained above may be developed or refined and then be embedded in a software application in the "dev" area of the illustrated system, whereby the trained function of the software application is then operated in the "ops" area of the illustrated system. The overall idea is to enable adjusting or refining the trained model or the corresponding software solution based on operational data from the "ops" are which may be handled or processed by the "big data architecture", whereby the adjustment or refinement is done in the "dev" area.

On the bottom right, i.e., in the "ops" area, a deployment tool for apps (such as software applications) with various micro services called "Productive Rancher Catalogue" is shown. It allows for data import, data export, a MQTT broker and a data monitor. The Productive Rancher Catalogue is part of a "Productive Cluster" which may belong to the operations side of the overall "Digital Service Architecture". The Productive Rancher Catalogue may provide software applications ("Apps") which may be deployed as cloud applications in the cloud or as edge applications on edge devices, such as devices and machines used in an industrial production facility or an energy generation or distribution facility (as explained in some detail above). The micro services may, e.g., represent or be comprised in such applications. The devices on which the corresponding application is running (or the application running on the respective device) may deliver data (such as sensor data, control data, etc.), e.g., as logs or raw data (or, e.g., input data), to a cloud storage named "Big data architecture" in Fig. 7.

This input data may be used on the development side ("dev") of the overall Digital Service Architecture to check whether the trained model (e.g., the trained function) (cf. "Your model" in the block "Code harmonization framework" in the block "Software & AI Development") is still accurate or needs to be amended (cf. determining of accuracy value of the trained function and amending the trained model, if the determined accuracy value is below a certain threshold). In the "Software & AI Development" area, there may be templates and AI models, and optionally the training of a new model may be performed. If an amendment is required, the trained model is amended accordingly and during an "Automated CI/CD Pipeline" (CI/CD = continuous integration / continuous delivery or continuous deployment) tested and - upon successful test - embedded in an application which may deployed as cloud application in the cloud or as edge application on edge devices when transferred to the Protective Cluster (mentioned above) of the operations side of the overall Digital Service Architecture (cf. Fig. 6 for details on the "Automated CI/CD Pipeline" which may correspond to the "AI@Edge specific MLOps Pipeline").

The Automated CI/CD Pipeline may comprise:

- Build "Base Image" & "Base Apps" -> build App Image and App
- Unit tests: software tests, machine learning model testing
- Integration test (docker on a machine, or cluster, e.g., Kubernetes cluster)
- HW (=hardware) integration test (deployment on real edge device / edge box)
- A new Image may be obtained suitable for release/deployment in the Productive Cluster

The described update or amendment of the trained model (e.g., the trained function) may be necessary, e.g., if a sensor or device is broken, has a malfunction on generally needs to be replaced. Also, sensors and devices are ageing so that a new calibration may be required from time to time. Such events may result in a trained model which is no more trustworthy, but rather needs to be updated.

The advantage of the suggested method and system embedded in such a Digital Service Architecture is that a deployment or an update of a trained model (e.g., the trained function) may be performed as quick as the replacement of the sensor or a device, e.g., only 15 minutes of recovery time are also needed for programming and deployment of a new trained model and an according application which comprises the new trained model. Another advantage is that the update of a deployed trained model and the corresponding application may be performed fully automatically.

The described examples may provide an efficient way to manage apps comprising a trained function, such as testing the deployability of such apps on a respective device or an IT system connected to the respective device using a virtual test environment, thereby enabling driving the digital transformation and empowering machine learning applications to influence and even maybe shape processes. One important aspect contribution of the present invention is that it helps smoothly and quickly deploying or updating apps comprising a trained function in a highly volatile environment on the shop floor. The present invention may support handling this challenge by providing a system to conveniently and quickly manage apps comprising a trained function, which may help to react properly, once the machine learning application is not behaving in the way it was trained to do. Thus, the described examples may reduce the total cost of ownership of the computer software products in general, by improving their management and update and by supporting to keep them up to date. Such efficient management of computer software products may be leveraged in any industry (e.g., Aerospace & Defense, Automotive & Transportation, Consumer Products & Retail, Electronics & Semiconductor, Energy & Utilities, Industrial Machinery & Heavy Equipment, Marine, or Medical Devices & Pharmaceuticals). Such efficient management of computer software products may also be applicable to a consumer facing the need of trustworthy and up-to-date computer software products.

In particular, the above examples are equally applicable to the computer system 100 and the app management platform 118 arranged and configured to execute the steps of the computer-implemented method of managing apps comprising a trained function, to the corresponding computer program product and to the corresponding computer-readable medium explained in the present patent document, respectively.

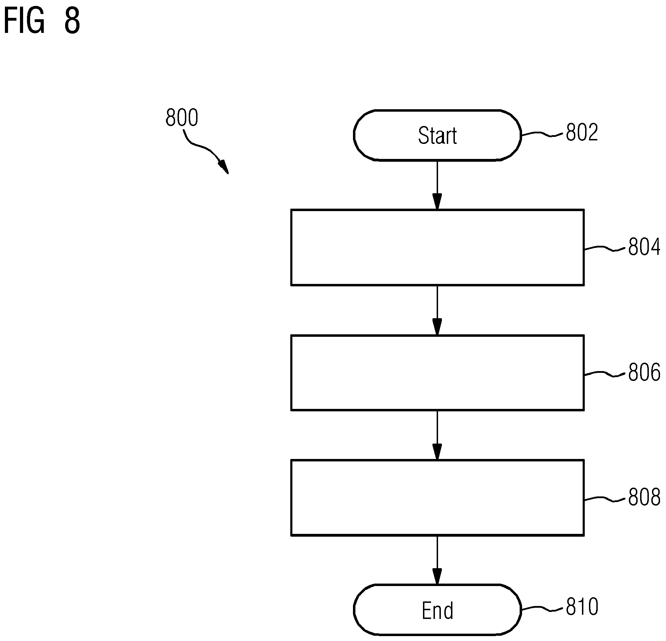

Referring now to Fig. 8, a methodology 800 that facilitates managing apps comprising a trained function, such as testing the deployability of such apps on a respective device or an IT system connected to the respective device using a virtual test environment is illustrated. The method may start at 802 and the methodology may comprise several acts carried out through operation of at least one processor. It should be appreciated that in some examples, the app is to be deployed on the respective device or an IT system connected to the respective device, wherein the app when deployed on the respective device or the IT system may be configured to receive input data relating to the respective device and to apply the trained function to the input data to generate output data for analyzing, monitoring, operating and/or controlling the respective device.

These acts may comprise an act 804 of embedding the trained function in the app; an act 806 of running the app in a virtual test environment comprising characteristics of the respective device or the IT system; and an act 808 of identifying the app as deployable on the respective device or the IT system, if running the app in the virtual test environment is successful. At 810 the methodology may end.

It should further be appreciated that the methodology 800 may comprise other acts and features discussed previously with respect to the computer-implemented method of managing apps comprising a trained function, such as testing the deployability of such apps on a respective device or an IT system connected to the respective device.

For example, the methodology may further comprise the act of providing device operation data to the virtual test environment, wherein the device operation data relate to data generated during an operation of the respective device; and the act of running the app in the virtual test environment 18 comprising the provided device operation data.

In some examples, the app may further comprise a preprocessing function for preprocessing the input data prior to applying the trained function to the input data, wherein the methodology may further comprise the act of embedding the preprocessing function in the app; and the act of running the app comprising the preprocessing function and the trained function in the virtual test environment.

It should also be appreciated, that in some examples, the methodology may further comprise the act of identifying the app as successfully tested app if the performance of the app in the virtual test environment corresponds to an expected performance of the app running on the respective device or the IT system.

In further examples, the methodology may further comprise the act of identifying the app as successfully tested app if the compatibility of the app in the virtual test environment corresponds to an expected compatibility of the app running on the respective device or the IT system.

In some examples, the methodology may further comprise the act of providing expected output data relating to a successful run of the app on the respective device or the IT system; the act of running the app in the virtual test environment to generate test output data; and the act of identifying the app as successfully tested app if the generated test output data corresponds to the provided expected output data.

It should also be appreciated, that in some examples, the methodology may further comprise the act of providing a typical operation scenario of the respective device or the IT system, the typical operation scenario comprising typical input data and corresponding typical expected output data; the act of running the app in the virtual test environment according to the typical operation scenario and using the typical input data to generate typical test output data; and the act of identifying the app as successfully tested app if the generated typical test output data corresponds to the provided typical expected output data.

In further examples, the methodology may further comprise the act of deploying the deployable app on the respective device or the IT system such that the app may be used for analyzing, monitoring, operating and/or controlling the respective device.

In some examples, the methodology may further comprise the act of analyzing, monitoring, operating and/or controlling the respective device using the deployed app.

It should also be appreciated, that in some examples, the methodology may further comprise the act of replacing the trained function with an amended trained function in the app to obtain an amended app; the act of running the amended app in the virtual test environment comprising characteristics of the respective device or the IT system; and the act of identifying the amended app as deployable on the respective device or the IT system, if running the amended app in the virtual test environment is successful.

As discussed previously, acts associated with these methodologies (other than any described manual acts such as an act of manually making a selection through the input device) may be carried out by one or more processors. Such processor(s) may be comprised in one or more data processing systems, for example, that execute software components operative to cause these acts to be carried out by the one or more processors. In an example embodiment, such software components may comprise computer-executable instructions corresponding to a routine, a sub-routine, programs, applications, modules, libraries, a thread of execution, and/or the like. Further, it should be appreciated that software components may be written in and/or produced by software environments/languages/frameworks such as Java, JavaScript, Python, C, C#, C++ or any other software tool capable of producing components and graphical user interfaces configured to carry out the acts and features described herein.

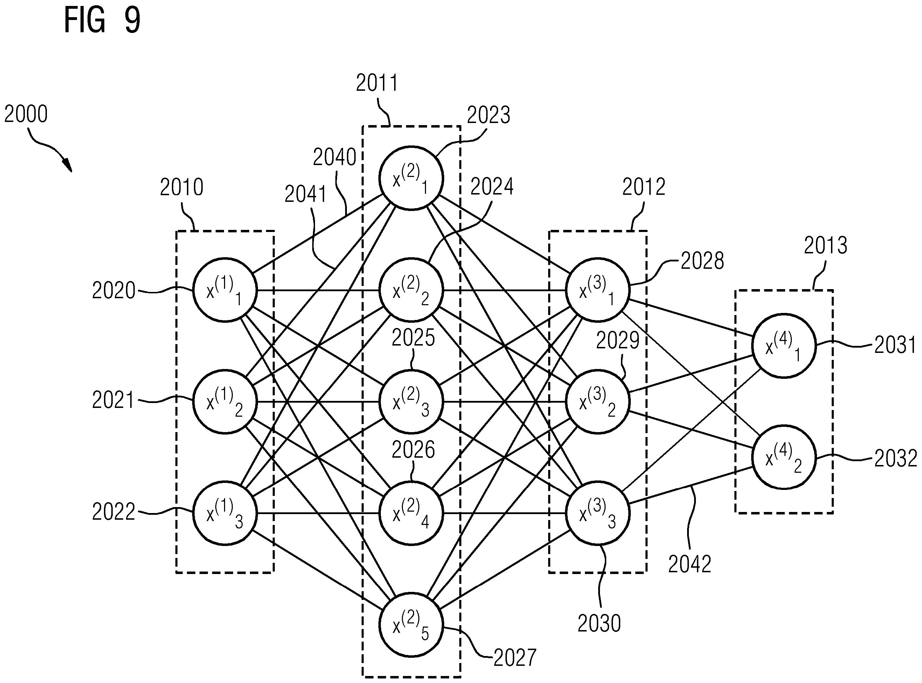

Fig. 9 displays an embodiment of an artificial neural network 2000 which may be used in the context of managing apps comprising a trained function, such as testing the deployability of such apps on a respective device or an IT system connected to the respective device using a virtual test environment. Herein, the trained function may correspond to such an artificial neural network 2000. Alternative terms for "artificial neural network" are "neural network", "artificial neural net" or "neural net".

The artificial neural network 2000 comprises nodes 2020, ..., 2032 and edges 2040, ..., 2042, wherein each edge 2040, ..., 2042 is a directed connection from a first node 2020, ..., 2032 to a second node 2020, ..., 2032. In general, the first node 2020, ..., 2032 and the second node 2020, ..., 2032 are different nodes 2020, ..., 2032, it is also possible that the first node 2020, ..., 2032 and the second node 2020, ..., 2032 are identical. For example, in Fig. 6 the edge 2040 is a directed connection from the node 2020 to the node 2023, and the edge 2042 is a directed connection from the node 2030 to the node 2032. An edge 2040, ..., 2042 from a first node 2020, ..., 2032 to a second node 2020, ..., 2032 is also denoted as "ingoing edge" for the second node 2020, ..., 2032 and as "outgoing edge" for the first node 2020, ..., 2032.

In this embodiment, the nodes 2020, ..., 2032 of the artificial neural network 2000 can be arranged in layers 2010, ..., 2013, wherein the layers can comprise an intrinsic order introduced by the edges 2040, ..., 2042 between the nodes 2020, ..., 2032. In particular, edges 2040, ..., 2042 can exist only between neighboring layers of nodes. In the displayed embodiment, there is an input layer 2010 comprising only nodes 2020, ..., 2022 without an incoming edge, an output layer 2013 comprising only nodes 2031, 2032 without outgoing edges, and hidden layers 2011, 2012 in-between the input layer 2010 and the output layer 2013. In general, the number of hidden layers 2011, 2012 can be chosen arbitrarily. The number of nodes 2020, ..., 2022 within the input layer 2010 usually relates to the number of input values of the neural network, and the number of nodes 2031, 2032 within the output layer 2013 usually relates to the number of output values of the neural network.

In particular, a (real) number can be assigned as a value to every node 2020, ..., 2032 of the neural network 2000. Here, $x^{(n)}_i$ denotes the value of the i-th node 2020, ..., 2032 of the n-th layer 2010, ..., 2013. The values of the nodes 2020, ..., 2022 of the input layer 2010 are equivalent to the input values of the neural network 2000, the values of the nodes 2031, 2032 of the output layer 2013 are equivalent to the output value of the neural network 2000. Furthermore, each edge 2040, ..., 2042 can comprise a weight being a real number, in particular, the weight is a real number within the interval [-1, 20] or within the interval [0, 20]. Here, $w^{(m,n)}_{i,j}$ denotes the weight of the edge between the i-th node 2020, ..., 2032 of the m-th layer 2010, ..., 2013 and the j-th node 2020, ..., 2032 of the n-th layer 2010, ..., 2013. Furthermore, the abbreviation $w^{(n)}_{i,j}$ is defined for the weight $w^{(n,n+1)}_{i,j}$.

In particular, to calculate the output values of the neural network 2000, the input values are propagated through the neural network. In particular, the values of the nodes 2020, ..., 2032 of the (n+1)-th layer 2010, ..., 2013 can be calculated based on the values of the nodes 2020, ..., 2032 of the n-th layer 2010, ..., 2013 by

$$x^{(n+1)}_j = f\left(\sum_i x^{(n)}_i \cdot w^{(n)}_{i,j}\right)$$

Herein, the function f is a transfer function (another term is "activation function"). Known transfer functions are step functions, sigmoid function (e.g., the logistic function, the generalized logistic function, the hyperbolic tangent, the Arctangent function, the error function, the smoothstep function) or rectifier functions. The transfer function is mainly used for normalization purposes.

In particular, the values are propagated layer-wise through the neural network, wherein values of the input layer 2010 are given by the input of the neural network 2000, wherein values of the first hidden layer 2011 can be calculated based on the values of the input layer 2010 of the neural network, wherein values of the second hidden layer 2012 can be calculated based in the values of the first hidden layer 2011, etc.

In order to set the values $w^{(m,n)}_{i,j}$ for the edges, the neural network 2000 has to be trained using training data. In particular, training data comprises training input data and training output data (denoted as $t_i$). For a training step, the neural network 2000 is applied to the training input data to generate calculated output data. In particular, the training data and the calculated output data comprise a number of values, said number being equal with the number of nodes of the output layer.

In particular, a comparison between the calculated output data and the training data is used to recursively adapt the weights within the neural network 2000 (backpropagation algorithm). In particular, the weights are changed according to

$$w'^{(n)}_{i,j} = w^{(n)}_{i,j} - \gamma \cdot \delta^{(n)}_j \cdot x^{(n)}_i$$

wherein $\gamma$ is a learning rate, and the numbers $\delta^{(n)}_j$ can be recursively calculated as

$$\delta^{(n)}_j = \left(\sum_k \delta^{(n+1)}_k \cdot w^{(n+1)}_{j,k}\right) \cdot f'\left(\sum_i x^{(n)}_i \cdot w^{(n)}_{i,j}\right)$$

based on $\delta^{(n+1)}_j$, if the (n+1)-th layer is not the output layer, and

$$\delta^{(n)}_j = \left(x^{(n+1)}_k - t^{(n+1)}_j\right) \cdot f'\left(\sum_i x^{(n)}_i \cdot w^{(n)}_{i,j}\right)$$

if the (n+1)-th layer is the output layer 2013, wherein f' is the first derivative of the activation function, and $y^{(n+1)}_j$ is the comparison training value for the j-th node of the output layer 2013.

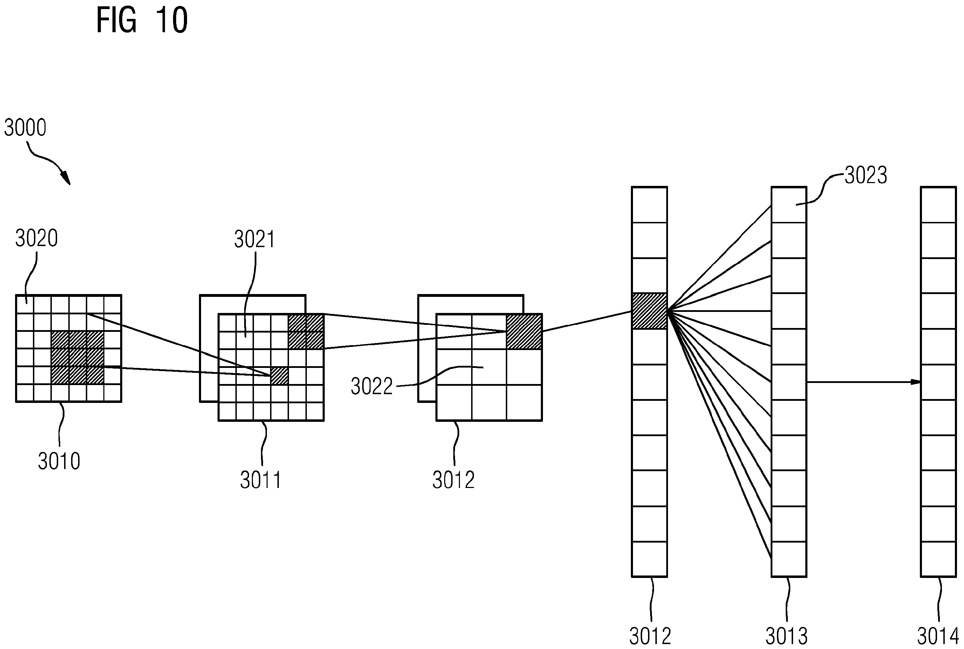

Fig. 10 displays an embodiment of a convolutional neural network 3000 which may be used in the context of managing apps comprising a trained function, such as testing the deployability of such apps on a respective device or an IT system connected to the respective device using a virtual test environment. Herein, the trained function may correspond to such an artificial neural network 3000.

In the displayed embodiment, the convolutional neural network comprises 3000 an input layer 3010, a convolutional layer 3011, a pooling layer 3012, a fully connected layer 3013 and an output layer 3014. Alternatively, the convolutional neural network 3000 can comprise several convolutional layers 3011, several pooling layers 3012 and several fully connected layers 3013, as well as other types of layers. The order of the layers can be chosen arbitrarily, usually fully connected layers 3013 are used as the last layers before the output layer 3014.

In particular, within a convolutional neural network 3000 the nodes 3020, ..., 3024 of one layer 3010, ..., 3014 can be considered to be arranged as a d-dimensional matrix or as a d-dimensional image. In particular, in the two-dimensional case the value of the node 3020, ..., 3024 indexed with i and j in the n-th layer 3010, ..., 3014 can be denoted as $x^{(n)}_{[i,j]}$. However, the arrangement of the nodes 3020, ..., 3024 of one layer 3010, ..., 3014 does not have an effect on the calculations executed within the convolutional neural network 3000 as such, since these are given solely by the structure and the weights of the edges.

In particular, a convolutional layer 3011 is characterized by the structure and the weights of the incoming edges forming a convolution operation based on a certain number of kernels. In particular, the structure and the weights of the incoming edges are chosen such that the values $x^{(n)}_k$ of the nodes 3021 of the convolutional layer 3011 are calculated as a convolution $x^{(n)}_k = K_k * x^{(n-1)}$ based on the values $x^{(n-1)}$ of the nodes 3020 of the preceding layer 3010, where the convolution * is defined in the two-dimensional case as

$$x^{(n)}_k[i,j] = (K_k * x^{(n-1)})[i,j] = \sum_{i'}\sum_{j'} K_k[i',j'] \cdot x^{(n-1)}[i-i', j-j'].$$

Here the k-th kernel $K_k$ is a d-dimensional matrix (in this embodiment a two-dimensional matrix), which is usually small compared to the number of nodes 3020, ..., 3024 (e.g., a 3x3 matrix, or a 5x5 matrix). In particular, this implies that the weights of the incoming edges are not independent but chosen such that they produce said convolution equation. In particular, for a kernel being a 3x3 matrix, there are only 9 independent weights (each entry of the kernel matrix corresponding to one independent weight), irrespectively of the number of nodes 3020, ..., 3024 in the respective layer 3010, ..., 3014. In particular, for a convolutional layer 3011 the number of nodes 3021 in the convolutional layer is equivalent to the number of nodes 3020 in the preceding layer 3010 multiplied with the number of kernels.

If the nodes 3020 of the preceding layer 3010 are arranged as a d-dimensional matrix, using a plurality of kernels can be interpreted as adding a further dimension (denoted as "depth" dimension), so that the nodes 3021 of the convolutional layer 3021 are arranged as a (d+1)-dimensional matrix. If the nodes 3020 of the preceding layer 3010 are already arranged as a (d+1)-dimensional matrix comprising a depth dimension, using a plurality of kernels can be interpreted as expanding along the depth dimension, so that the nodes 3021 of the convolutional layer 3021 are arranged also as a (d+1)-dimensional matrix, wherein the size of the (d+1)-dimensional matrix with respect to the depth dimension is by a factor of the number of kernels larger than in the preceding layer 3010.

The advantage of using convolutional layers 3011 is that spatially local correlation of the input data can exploited by enforcing a local connectivity pattern between nodes of adjacent layers, in particular by each node being connected to only a small region of the nodes of the preceding layer.

In the displayed embodiment, the input layer 3010 comprises 36 nodes 3020, arranged as a two-dimensional 6x6 matrix. The convolutional layer 3011 comprises 72 nodes 3021, arranged as two two-dimensional 6x6 matrices, each of the two matrices being the result of a convolution of the values of the input layer with a kernel. Equivalently, the nodes 3021 of the convolutional layer 3011 can be interpreted as arranges as a three-dimensional 6x6x2 matrix, wherein the last dimension is the depth dimension.

A pooling layer 3012 can be characterized by the structure and the weights of the incoming edges and the activation function of its nodes 3022 forming a pooling operation based on a non-linear pooling function f. For example, in the two-dimensional case the values $x^{(n)}$ of the nodes 3022 of the pooling layer 3012 can be calculated based on the values $x^{(n-1)}$ of the nodes 3021 of the preceding layer 3011 as

$$x^{(n)}[i,j] = f(x^{(n-1)}[id_1, jd_2], ..., x^{(n-1)}[id_1+d_1-1, jd_2+d_2-1])$$

In other words, by using a pooling layer 3012 the number of nodes 3021, 3022 can be reduced, by replacing a number d1·d2 of neighboring nodes 3021 in the preceding layer 3011 with a single node 3022 being calculated as a function of the values of said number of neighboring nodes in the pooling layer. In particular, the pooling function f can be the max-function, the average or the L2-Norm. In particular, for a pooling layer 3012 the weights of the incoming edges are fixed and are not modified by training.

The advantage of using a pooling layer 3012 is that the number of nodes 3021, 3022 and the number of parameters is reduced. This leads to the amount of computation in the network being reduced and to a control of overfitting.

In the displayed embodiment, the pooling layer 3012 is a max-pooling, replacing four neighboring nodes with only one node, the value being the maximum of the values of the four neighboring nodes. The max-pooling is applied to each d-dimensional matrix of the previous layer; in this embodiment, the max-pooling is applied to each of the two two-dimensional matrices, reducing the number of nodes from 72 to 18.

A fully connected layer 3013 can be characterized by the fact that a majority, in particular, all edges between nodes 3022 of the previous layer 3012 and the nodes 3023 of the fully connected layer 3013 are present, and wherein the weight of each of the edges can be adjusted individually.

In this embodiment, the nodes 3022 of the preceding layer 3012 of the fully connected layer 3013 are displayed both as two-dimensional matrices, and additionally as non-related nodes (indicated as a line of nodes, wherein the number of nodes was reduced for a better presentability). In this embodiment, the number of nodes 3023 in the fully connected layer 3013 is equal to the number of nodes 3022 in the preceding layer 3012. Alternatively, the number of nodes 3022, 3023 can differ.

Furthermore, in this embodiment the values of the nodes 3024 of the output layer 3014 are determined by applying the Softmax function onto the values of the nodes 3023 of the preceding layer 3013. By applying the Softmax function, the sum of the values of all nodes 3024 of the output layer is 1, and all values of all nodes 3024 of the output layer are real numbers between 0 and 1. In particular, if using the convolutional neural network 3000 for categorizing input data, the values of the output layer can be interpreted as the probability of the input data falling into one of the different categories.

A convolutional neural network 3000 can also comprise a ReLU (acronym for "rectified linear units") layer. In particular, the number of nodes and the structure of the nodes contained in a ReLU layer is equivalent to the number of nodes and the structure of the nodes contained in the preceding layer. In particular, the value of each node in the ReLU layer is calculated by applying a rectifying function to the value of the corresponding node of the preceding layer. Examples for rectifying functions are $f(x) = max(0,x)$, the tangent hyperbolics function or the sigmoid function.

In particular, convolutional neural networks 3000 can be trained based on the backpropagation algorithm. For preventing overfitting, methods of regularization can be used, e.g., dropout of nodes 3020, ..., 3024, stochastic pooling, use of artificial data, weight decay based on the L1 or the L2 norm, or max norm constraints.

It is important to note that while the disclosure comprises a description in the context of a fully functional system and/or a series of acts, those skilled in the art will appreciate that at least portions of the mechanism of the present disclosure and/or described acts are capable of being distributed in the form of computer-executable instructions contained within non-transitory machine-usable, computer-usable, or computer-readable medium in any of a variety of forms, and that the present disclosure applies equally regardless of the particular type of instruction or data bearing medium or storage medium utilized to actually carry out the distribution. Examples of non-transitory machine usable/readable or computer usable/readable mediums comprise: ROMs, EPROMs, magnetic tape, floppy disks, hard disk drives, SSDs, flash memory, CDs, DVDs, and Blu-ray disks. The computer-executable instructions may comprise a routine, a sub-routine, programs, applications, modules, libraries, a thread of execution, and/or the like. Still further, results of acts of the methodologies may be stored in a computer-readable medium, displayed on a display device, and/or the like.

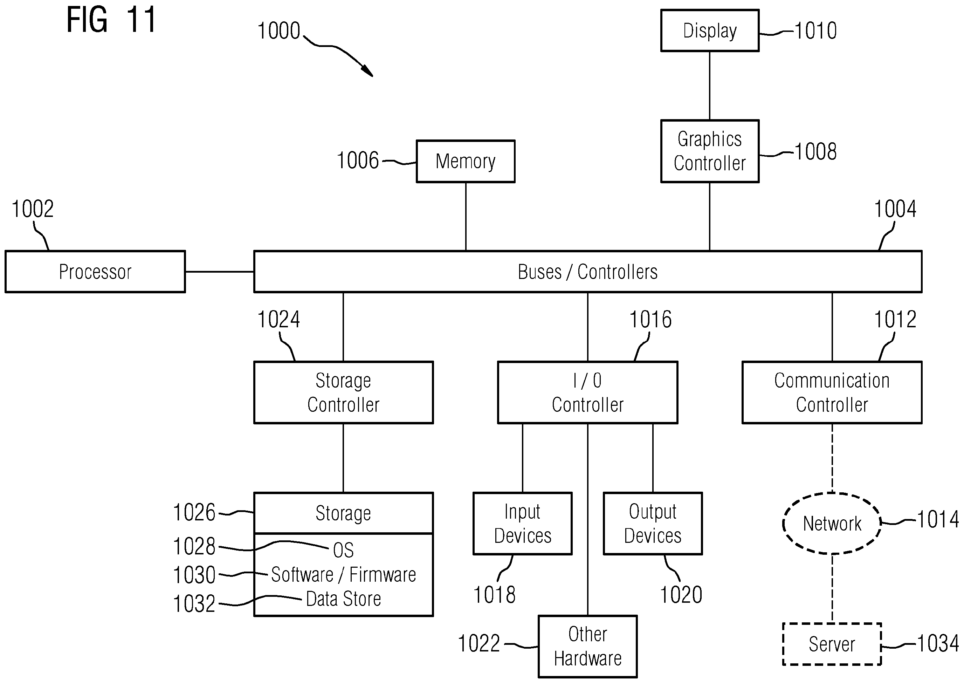

Fig. 11 illustrates a block diagram of a data processing system 1000 (also referred to as a computer system) in which an embodiment can be implemented, for example, as a portion of a product system, and/or other system operatively configured by software or otherwise to perform the processes as described herein. The data processing system 1000 may comprise, for example, the computer or IT system or data processing system 100 mentioned above. The data processing system depicted comprises at least one processor 1002 (e.g., a CPU) that may be connected to one or more bridges/controllers/buses 1004 (e.g., a north bridge, a south bridge). One of the buses 1004, for example, may comprise one or more I/O buses such as a PCI Express bus. Also connected to various buses in the depicted example may comprise a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures comprise IA-32, x86-64, and ARM processor architectures.

Other peripherals connected to one or more buses may comprise communication controllers 1012 (Ethernet controllers, WiFi controllers, cellular controllers) operative to connect to a local area network (LAN), Wide Area Network (WAN), a cellular network, and/or other wired or wireless networks 1014 or communication equipment.

Further components connected to various busses may comprise one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) comprising input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that comprises a touch screen that serves as both an input and display device. Further, it should be appreciated that some input devices (such as a laptop) may comprise a plurality of different types of input devices (e.g., touch screen, touch pad, keyboard). Also, it should be appreciated that other peripheral hardware 1022 connected to the I/O controllers 1016 may comprise any type of device, machine, or component that is configured to communicate with a data processing system.

Additional components connected to various busses may comprise one or more storage controllers 1024 (e.g., SATA). A storage controller may be connected to a storage device 1026 such as one or more storage drives and/or any associated removable media, which can be any suitable non-transitory machine usable or machine-readable storage medium. Examples comprise nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system in accordance with an embodiment of the present disclosure may comprise an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may comprise Microsoft Windows, Linux, UNIX, iOS, and Android operating systems. Also, examples of data stores comprise data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system network or combination of networks, as known to those of skill in the art, comprising the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures comprise VMware ESCi, Microsoft Hyper-V, Xen, and KVM.

Those of ordinary skill in the art will appreciate that the hardware depicted for the data processing system may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor described herein may be located in a server that is remote from the display and input devices described herein. In such an example, the described display device and input device may be comprised in a client device that communicates with the server (and/or a virtual machine executing on the server) through a wired or wireless network (which may comprise the Internet). In some embodiments, such a client device, for example, may execute a remote desktop application or may correspond to a portal device that carries out a remote desktop protocol with the server in order to send inputs from an input device to the server and receive visual information from the server to display through a display device. Examples of such remote desktop protocols comprise Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein a processor corresponds to any electronic device that is configured via hardware circuits, software, and/or firmware to process data. For example, processors described herein may correspond to one or more (or a combination) of a microprocessor, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "comprise" and "comprise," as well as derivatives thereof, mean inclusion without limitation. The singular forms "a", "an" and "the" are intended to comprise the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to comprise, be comprised within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

In addition, the term "adjacent to" may mean: that an element is relatively near to but not in contact with a further element; or that the element is in contact with the further portion, unless the context clearly indicates otherwise.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present patent document should be read as implying that any particular element, step, act, or function is an essential element, which must be comprised in the claim scope: the scope of patented subject matter is defined only by the allowed claims.

**Claims**

1.  Computer-implemented method of managing an app (120) comprising a trained function (122),

    wherein the app (120) is to be deployed on a respective device (150) or an IT system (152) connected to the respective device (150), and
    wherein the app (120) when deployed on the respective device (150) or the IT system (152) is configured to

      • receive input data (124) relating to the respective device (150) and
      • apply the trained function (122) to the input data (124) to generate output data (126) for analyzing, monitoring, operating and/or controlling the respective device (150),

    the method comprising:

      • embedding the trained function (122) in the app (120);
      • running the app (120) in a virtual test environment (128) comprising characteristics (130) of the respective device (150) or the IT system (152); and
      • identifying the app (120) as deployable on the respective device (150) or the IT system (152), if running the app (120) in the virtual test environment (128) is successful.

2.  Computer-implemented method according to claim 1, wherein the characteristics (130) and/or the virtual test environment (128) comprises at least one of:

      • a respective test software environment corresponding to the software environment of the respective device (150) or the IT system (152);
      • respective test hardware parameters corresponding to the hardware parameters of the respective device (150) or the IT system (152) comprising computation and storage parameters of the respective device (150) or the IT system (152);
      • a respective test interface corresponding to the respective interface of the respective device (150) or the IT system (152);
      • respective test configuration parameters corresponding to configuration parameters of the app (120) adapted for running the app (120) on the respective device (150) or the IT system (152);
      • or any combination thereof.

3.  Computer-implemented method according to any of the preceding claims, further comprising:

      • providing device operation data to the virtual test environment (128), wherein the device operation data relate to data generated during an operation of the respective device (150); and
      • running the app (120) in the virtual test environment (128) comprising the provided device operation data.

4.  Computer-implemented method according to any of the preceding claims,

    wherein the app (120) further comprises a preprocessing function (132) for preprocessing the input data (124) prior to applying the trained function (122) to the input data (124),

the method further comprising:

- embedding the preprocessing function (132) in the app (120); and
- running the app (120) comprising the preprocessing function (132) and the trained function (122) in the virtual test environment (128).

5. Computer-implemented method according to any of the preceding claims, further comprising:

- identifying the app (120) as successfully tested app (120) if the performance of the app (120) in the virtual test environment (128) corresponds to an expected performance of the app (120) running on the respective device (150) or the IT system (152).

6. Computer-implemented method according to any of the preceding claims, further comprising:

- identifying the app (120) as successfully tested app (120) if the operability of the app (120) in the virtual test environment (128) corresponds to an expected operability of the app (120) running on the respective device (150) or the IT system (152).

7. Computer-implemented method according to any of the preceding claims, further comprising:

- identifying the app (120) as successfully tested app (120) if the compatibility of the app (120) in the virtual test environment (128) corresponds to an expected compatibility of the app (120) running on the respective device (150) or the IT system (152).

8. Computer-implemented method according to any of the preceding claims, further comprising:

- providing expected output data (126A) relating to a successful run of the app (120) on the respective device (150) or the IT system (152);
- running the app (120) in the virtual test environment (128) to generate test output data (126B); and
- identifying the app (120) as successfully tested app (120) if the generated test output data (126B) corresponds to the provided expected output data (126A).

9. Computer-implemented method according to any of the preceding claims, further comprising:

- providing a typical operation scenario of the respective device (150) or the IT system (152), the typical operation scenario comprising typical input data (124A) and corresponding typical expected output data (126C);
- running the app (120) in the virtual test environment (128) according to the typical operation scenario and using the typical input data (124A) to generate typical test output data (126D); and
- identifying the app (120) as successfully tested app (120) if the generated typical test output data (126D) corresponds to the provided typical expected output data (126C).

10. Computer-implemented method according to any of the preceding claims, further comprising:

- deploying the deployable app (120) on the respective device (150) or the IT system (152) such that the app (120) may be used for analyzing, monitoring, operating and/or controlling the respective device (150).

11. Computer-implemented method according to claim 10, further comprising:

- analyzing, monitoring, operating and/or controlling the respective device (150) using the deployed app (120).

12. Computer-implemented method according to any of the preceding claims, further comprising:

- replacing the trained function (122) with an amended trained function (122') in the app (120) to obtain an amended app (120');
- running the amended app (120') in the virtual test environment (128) comprising characteristics (130) of the respective device (150) or the IT system (152); and
- identifying the amended app (120') as deployable on the respective device (150) or the IT system (152), if running the amended app (120') in the virtual test environment (128) is successful.

13. Computer system (100, 118) arranged and configured to execute the steps of the computer-implemented method according to any one of the preceding claims.

14. A computer program product (162), comprising computer program code which, when executed by a computer system (100), cause the computer system (100, 118) to carry out the method of one of the claims 1 to 12.

15. A computer-readable medium (160) comprising a computer program product (162) comprising computer program code which, when executed by a computer system (100, 118), cause the computer system (100, 118) to carry out the method of one of the claims 1 to 12.

# FIG 1

EP 4 141 679 A1

# FIG 2

FIG 3

# FIG 4

EP 4 141 679 A1

# FIG 5

## FIG 6

EP 4 141 679 A1

# FIG 7

**Software & AI Development**

Software Engineering

Model & Code repository

Data Science

Data Engineering

Code harmonization framework

Block F

Block C · Block E

Block B · Block D

Block A

Image registry

**Automated CI/CD Pipeline**

Build

Unit basis

tests

App scripts

Model

App Images

**Integration test docker compose**

tests

App A · App B · App C

Integration test cluster

**Hardware integration test**

RANCHER

tests

App A · App C · App B

No repository

Productive Chart Repository

Releases

App A · App C · App B

**Big Data architecture**

Processed | Results | Logs

Raw

**Data Ops**

3rd Level

2nd Level

Automated Notification

1st Level

**Automated monitoring and notification stack**

Visualization and Monitoring

Log Inteligence

Store, Search and Analyze

Collect and Transform

Logs · Raw & results

Logs

Raw & results

Results

**Customer IT/OT**

Customer dashboard

**Cloud Application**

App A · App C · App B

Edge Application

App A · App B · App C

**Productive Cluster**

Productive Rancher Catalog

RANCHER

EP 4 141 679 A1

FIG 8

EP 4 141 679 A1

800

Start — 802

804

806

808

End — 810

FIG 9

FIG 10

3000

3020

3021

3023

3010

3011

3022

3012

3012    3013    3014

**FIG 11**

EP 4 141 679 A1

Europäisches
Patentamt

European
Patent Office

Office européen
des brevets

# EUROPEAN SEARCH REPORT

Application Number

**EP 21 19 3272**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/303759 A1 (FARABET CLEMENT [US] ET AL) 3 October 2019 (2019-10-03) | 1-15 | INV. G06F11/36 G05B23/00 G06F8/60 |
| Y | * abstract * * figures 1,2, 10 * * paragraph [0003] – paragraph [0007] * * paragraph [0027] – paragraph [0034] * * paragraph [0053] * * paragraph [0059] * * paragraph [0066] * * paragraph [0108] * * paragraph [0116] – paragraph [0123] * ----- | 1-15 | |
| Y | US 2011/307860 A1 (PARK HONG SEONG [KR] ET AL) 15 December 2011 (2011-12-15) * abstract * * paragraph [0003] * * paragraph [0014] – paragraph [0018] * * paragraph [0061] * * paragraph [0109] – paragraph [0126]; figures 1,8-11 * ----- | 1-15 | |
| Y | US 2020/159648 A1 (GHARE GAURAV D [US] ET AL) 21 May 2020 (2020-05-21) * paragraph [0020] – paragraph [0028] * * paragraph [0063] – paragraph [0064] * * paragraph [0072] – paragraph [0073] * * paragraph [0078] * * paragraph [0083] – paragraph [0086] * * paragraph [0116] * ----- | 1-15 | TECHNICAL FIELDS SEARCHED (IPC) G06F G05B |
| Y | US 2019/155970 A1 (MATTHEWS DAVID [US] ET AL) 23 May 2019 (2019-05-23) * the whole document * ----- | 1-15 | |

The present search report has been drawn up for all claims

| Place of search | Date of completion of the search | Examiner |
|---|---|---|
| Munich | 1 February 2022 | Lanchès, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 3272

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2022

| Patent document cited in search report | | Publication date | Patent family member(s) | | Publication date |
|---|---|---|---|---|---|
| US 2019303759 | A1 | 03-10-2019 | CN | 111919225 A | 10-11-2020 |
| | | | DE | 112019001605 T5 | 17-12-2020 |
| | | | US | 2019303759 A1 | 03-10-2019 |
| | | | WO | 2019191306 A1 | 03-10-2019 |
| US 2011307860 | A1 | 15-12-2011 | KR | 20110134582 A | 15-12-2011 |
| | | | US | 2011307860 A1 | 15-12-2011 |
| US 2020159648 | A1 | 21-05-2020 | NONE | | |
| US 2019155970 | A1 | 23-05-2019 | NONE | | |

EPO FORM P0459

For more details about this annex : see Official Journal of the European Patent Office, No. 12/82